(19) Europäisches Patentamt
European Patent Office
Office européen des brevets

(11) EP 2 801 589 A1

(12) **EUROPEAN PATENT APPLICATION**
published in accordance with Art. 153(4) EPC

(43) Date of publication:
**12.11.2014 Bulletin 2014/46**

(21) Application number: **12849520.7**

(22) Date of filing: **14.11.2012**

(51) Int Cl.:
***C08L 101/00*** *(2006.01)* ***C08G 64/08*** *(2006.01)*
***C08L 69/00*** *(2006.01)* ***G02B 6/00*** *(2006.01)*

(86) International application number:
**PCT/JP2012/080113**

(87) International publication number:
**WO 2013/073709 (23.05.2013 Gazette 2013/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2011 JP 2011251652**
**29.03.2012 JP 2012076867**

(71) Applicant: **Teijin Limited**
**Osaka-shi, Osaka 541-0054 (JP)**

(72) Inventors:
- **MIYAKE Toshiyuki**
**Tokyo 100-0013 (JP)**
- **SHINAGAWA Asuka**
**Tokyo 100-0013 (JP)**
- **TAKAHASHI Naoshi**
**Tokyo 100-0013 (JP)**
- **MURAI Maiko**
**Tokyo 100-0013 (JP)**

(74) Representative: **Adam, Holger et al**
**Kraus & Weisert**
**Patentanwälte PartGmbB**
**Thomas-Wimmer-Ring 15**
**80539 München (DE)**

(54) **RESIN COMPOSITION HAVING LIGHT GUIDING PROPERTIES, AND LIGHT-GUIDING MOLDED ARTICLE AND PLANAR LIGHT SOURCE MADE FROM SAME**

(57) A transparent resin composition having light guiding properties, a light guide molded article and a surface light source body.

The resin composition comprises a polycarbonate (component A) and a polycarbonate-polydiorganosiloxane copolymer (component B) and has light-guiding ability, wherein
(i) the component B contains a specific carbonate unit and a specific organosiloxane unit;
(ii) the content of a polydiorganosiloxane block is 0.001 to 1.0 wt% based on the total weight of the resin composition; and
(iii) the component B has polydiorganosiloxane domains having an average size of 0.5 to 40 nm existent in a polycarbonate matrix.

EP 2 801 589 A1

## Description

TECHNICAL FIELD

The present invention relates to a resin composition having light-guiding ability, and a light guide molded article and a surface light source body comprising the same. More specifically, it relates to a resin composition which is excellent in transparency, light guiding properties, heat stability and hue. Also, it relates to a resin composition having light-guiding ability which can be advantageously used in optical lenses, optical devices such as light guide molded articles (light guide bodies, light guide plates), covers for display panels and lighting and glass substitutes, and a light guide molded article and a surface light source body comprising the same.

BACKGROUND ART

A light guide plate has the function of diffusing light applied from the side surface and emitting uniform light to the surface. When this light guide plate is used in a panel, it is not necessary to install a light source in the back, thereby making it possible to manufacture a thin efficient panel having no unevenness. Therefore, it is expected to be used in a wide variety of fields such as liquid crystal display devices for personal computers and cell phones and lighting equipment. Materials for light guide molded articles have been desired to experience little deterioration of light from a light source, that is, light guiding properties, and polymethyl methacrylate (may be abbreviated as "PMMA" hereinafter) out of transparent resins has been used as the most suitable material. However, PMMA is not always satisfactory in terms of impact resistance and heat stability and has a problem that its use environment is limited in the above application fields. Further, since light emitting diodes (LED) have been increasingly used in light sources from the viewpoints of long service life and low power consumption, heat resistance has been desired for the light guide molded articles in addition to the above characteristic properties. Therefore, a technology for improving the light guiding properties of a polycarbonate which is excellent in heat resistance and impact resistance has been attracting attention.

As an example in which the light guiding properties of a polycarbonate have been improved, there is reported an aromatic polycarbonate composition for light guide plates which is obtained by mixing a specific stabilizer and a specific release agent with a polycarbonate having a viscosity average molecular weight of 13,000 to 15,000 (Patent Document 1). Although the improvement of light guiding properties, that is, brightness is mentioned, as for the improvement of hue, only the improvement of yellowing by so-called discoloration is stated but not in-plane color difference.

Patent Documents 2 to 4 disclose a composition prepared by mixing an aromatic polycarbonate with an acrylic resin having higher transparency. However, this method cannot avoid white turbidity due to the addition of the acrylic resin and a diffusing agent.

Patent Document 5 discloses a composition prepared by mixing an aromatic polycarbonate with a polyorganosiloxane having a branched siloxane structure. However, this method cannot provide a satisfactory light guide plate because the generation of a gas and the agglomeration of siloxane during molding seem likely.

Meanwhile, as a resin composition comprising a polycarbonate and a polycarbonate-polydiorganosiloxane copolymer, there is reported a thermoplastic resin composition having polysiloxane domains with an average domain size of 20 to 45 nm or 20 to 40 nm in a polycarbonate polymer matrix (Patent Document 6). However, Patent Document 6 is utterly silent about light guiding properties.

(Patent Document 1) JP-A 2007-204737
(Patent Document 2) Japanese Patent No. 3330498
(Patent Document 3) Japanese Patent No. 3516908
(Patent Document 4) JP-A 2006-201667
(Patent Document 5) Japanese Patent No. 4446668
(Patent Document 6) JP-A 2006-523243

DISCLOSURE OF THE INVENTION

It is an object of the present invention to provide a polycarbonate resin composition having light-guiding ability, and a light guide molded article and a surface light source body comprising the same.

The inventors of the present invention conducted intensive studies to attain the above object and found that a resin composition which has excellent light guiding properties and excellent hue with a small in-plane color difference is obtained by combining a polycarbonate and a polycarbonate-polydiorganosiloxane copolymer having specific polydiorganosiloxane domains. The present invention was accomplished based on this finding.

That is, according to the present invention, there is provided a resin composition comprising a polycarbonate (component A) and a polycarbonate-polydiorganosiloxane copolymer (component B) and having light-guiding ability,

wherein

(i) the component B contains a unit represented by the following formula (2) and a unit represented by the following formula (4);
(ii) the content of a polydiorganosiloxane block represented by the following formula (5) contained in the formula (4) is 0.001 to 1.0 wt% based on the total weight of the resin composition; and
(iii) the component B has polydiorganosiloxane domains having an average size of 0.5 to 40 nm existent in a polycarbonate matrix.

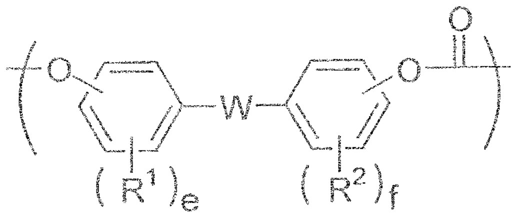

(2)

[In the formula (2), $R^1$ and $R^2$ are each independently a group selected from the group consisting of hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 3 to 14 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^1$'s and a plurality of $R^2$'s, "e" and "f" are each an integer of 1 to 4, W is a single bond or at least one group selected from the group consisting of groups represented by the following formulas (3).

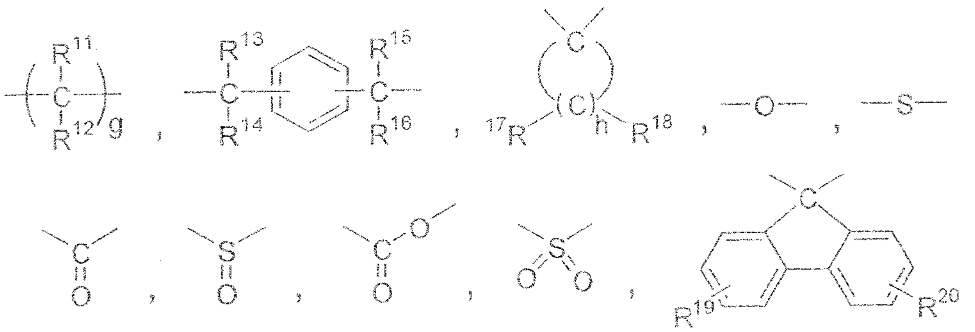

(3)

(In the formulas (3), $R^{11}$, $R^{12}$, $R^{13}$, $R^{14}$, $R^{15}$, $R^{16}$, $R^{17}$ and $R^{18}$ are each independently a group selected from the group consisting of hydrogen atom, alkyl group having 1 to 18 carbon atoms, aryl group having 3 to 14 carbon atoms and aralkyl group having 7 to 20 carbon atoms, $R^{19}$ and $R^{20}$ are each independently a group selected from the group consisting of hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^{19}$'s and a plurality of $R^{20}$'s, "g" is an integer of 1 to 10, and "h" is an integer of 4 to 7.).]

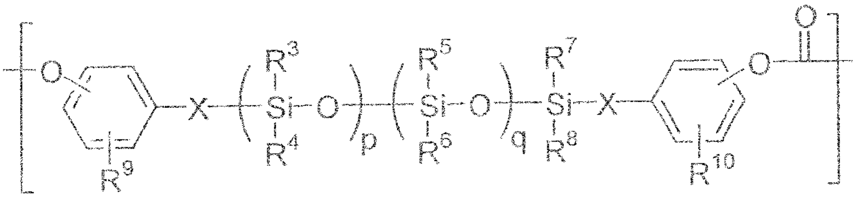

(4)

(In the formula (4), $R^3$, $R^4$, $R^5$, $R^6$, $R^7$ and $R^8$ are each independently a hydrogen atom, alkyl group having 1 to 12 carbon atoms, or substituted or nonsubstituted aryl group having 6 to 12 carbon atoms, $R^9$ and $R^{10}$ are each

independently a hydrogen atom, halogen atom, alkyl group having 1 to 10 carbon atoms or alkoxy group having 1 to 10 carbon atoms, "p" is a natural number, "q" is 0 or a natural number, (p+q) is a natural number of not more than 150, and X is a divalent aliphatic group having 2 to 8 carbon atoms).

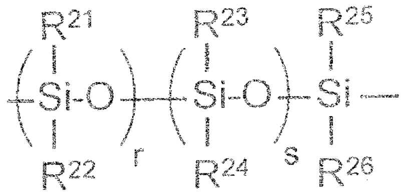

(5)

(In the formula (5), $R^{21}$, $R^{22}$, $R^{23}$, $R^{24}$, $R^{25}$ and $R^{26}$ are identical to $R^3$, $R^4$, $R^5$, $R^6$, $R^7$ and $R^8$ of the formula (4), respectively. "r" is the same as "p". "s" is the same as "q". (r+s) is the same as (p+q).)

BRIEF DESCRIPTION OF THE DRAWINGS

Fig. 1 is a schematic diagram showing a method of measuring light guiding properties (brightness, in-plane color difference) in the present invention.

Explanation of symbols

A plate test specimen (100 mm x 70 mm x 4 mm) (the rear surface is embossed at intervals of 0.1 mm)
B light source
L surface luminance
($x_1$, $y_1$) chromaticity at a site 80 mm away from the side surface on the light source side
($x_2$, $y_2$) chromaticity at a site 20 mm away from the side surface on the light source side

BEST MODE FOR CARRYING OUT THE INVENTION

The present invention will be described in detail hereinunder.

(component A: polycarbonate)

The polycarbonate (component A) is obtained by reacting a dihydroxy compound with a carbonate precursor by interfacial polycondensation or melt transesterification. It is also obtained by polymerizing a carbonate prepolymer by solid-phase transesterification, or by ring-opening polymerizing a cyclic carbonate compound.

The dihydroxy compound as used herein may be a bisphenol or an aliphatic diol if it is used as a dihydroxy compound for an aromatic polycarbonate. Examples of the bisphenol include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyl diphenol, 4,4'-dihydroxydiphenyl sulfoxide, 4,4'-dihydroxydiphenyl sulfide, 2,2'-dimethyl-4,4'-sulfonyl diphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyl diphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.$0^{2,6}$]decane, 4,4'-(1,3-adamantanediyl)diphenol and 1,3-bis(4-hydroxyphenyl)-5,7-dimethyladamantane.

Examples of the aliphatic diol include 2,2-bis-(4-hydroxycyclohexyl)-propane, 1,14-tetradecanediol, octaethylene glycol, 1,16-hexadecanediol, 4,4'-bis(2-hydroxyethoxy)biphenyl, bis{(2-hydroxyethoxy)phenyl}methane, 1,1-bis{(2-hydroxyethoxy)phenyl}ethane, 1,1-bis{(2-hydroxyethoxy)phenyl}-1-phenylethane, 2,2-bis{(2-hydroxyethoxy)phenyl}propane, 2,2-bis{(2-hydroxyethoxy)-3-methylphenyl}propane, 1,1-bis{(2-hydroxyethoxy)phenyl}-3,3,5-trimethylcyclohexane, 2,2-bis{4-(2-hydroxyethoxy)-3,3'-biphenyl}propane, 2,2-bis{(2-hydroxyethoxy)-3-isopropylphenyl}propane, 2,2-bis{3-t-butyl-4-(2-hydroxyethoxy)phenyl}propane, 2,2-bis{(2-hydroxyethoxy)phenyl}butane, 2,2-bis{(2-hydroxyethoxy)phenyl}-4-methylpentane, 2,2-bis{(2-hydroxyethoxy)phenyl}octane, 1,1-bis{(2-hydroxyethoxy)phenyl}decane, 2,2-bis{3-bromo-4-(2-hydroxyethoxy)phenyl}propane, 2,2-bis{3,5-dimethyl-4-(2-hydroxyethoxy)phenyl}propane, 2,2-bis{3-cyclohexyl-4-(2-hydroxyethoxy)phenyl}propane, 1,1-bis{3-cyclohexyl-4-(2-hydroxyethoxy)phenyl} cyclohexane, bis{(2-hydroxyethoxy)phenyl}diphenylmethane, 9,9-bis{(2-hydroxyethoxy)phenyl}fluorene, 9,9-bis{4-(2-hydroxyethoxy)-3-methylphenyl}fluorene, 1,1-bis{(2-hydroxyethoxy)phenyl}cyclohexane, 1,1-bis{(2-hydroxyethoxy)phenyl}cyclopentane, 4,4'-bis(2-hydroxyethoxy)diphenyl ether, 4,4'-bis(2-hydroxyethoxy)-3,3'-dimethyldiphenyl ether, 1,3-bis[2-{(2-hydroxyethoxy)phenyl}propyl]benzene, 1,4-bis[2-{(2-hydroxyethoxy)phenyl}propyl]benzene, 1,4-bis{(2-hydroxyethoxy)phenyl}cyclohexane, 1,3-bis{(2-hydroxyethoxy)phenyl}cyclohexane, 4,8-bis{(2-hydroxyethoxy)phenyl}tricyclo[5.2.1.0$^{2,6}$] decane, 1,3-bis{(2-hydroxyethoxy)phenyl}-5,7-dimethyladamantane, 3,9-bis(2-hydroxy-1,1-dimethylethyl)-2,4,8,10-tetraoxaspiro(5,5)undecane, 1,4:3,6-dianhydro-D-sorbitol (isosorbide), 1,4:3,6-dianhydro-D-mannitol (isomannide) and 1,4:3,6-dianhydro-L-iditol (isoidide).

Out of these, aromatic bisphenols are preferred, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene and 1,4-bis{2-(4-hydroxyphenyl)propyl}benzene are more preferred, and 2,2-bis(4-hydroxyphenyl)propane, 1,1-bis(4-hydroxyphenyl)cyclohexane, 4,4'-sulfonyldiphenol and 9,9-bis(4-hydroxy-3-methylphenyl)fluorene are particularly preferred. 2,2-bis(4-hydroxyphenyl)propane having high strength and high durability is most preferred. They may be used alone or in combination of two or more.

The polycarbonate (component A) may be changed to a branched polycarbonate by using a branching agent in combination with the above dihydroxy compound. A polyfunctional aromatic compound having 3 or more functional groups used in the branched polycarbonate is phloroglucin, phloroglucide, a trisphenol such as 4,6-dimethyl-2,4,6-tris(4-hydroxyphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol or 4-{4-[1,1-bis(4-hydroxyphenyl)ethyl]benzene}-$\alpha$,$\alpha$-dimethylbenzylphenol, tetra(4-hydroxyphenyl)methane, bis(2,4-dihydroxyphenyl)ketone, 1,4-bis(4,4-dihydroxytriphenylmethyl)benzene, or trimellitic acid, pyromellitic acid, benzophenone tetracarboxylic acid or acid chloride thereof. Out of these, 1,1,1-tris(4-hydroxyphenyl)ethane and 1,1,1-tris(3,5-di.methyl-4-hydroxyphenyl)ethane are preferred, and 1,1,1-tris(4-hydroxyphenyl)ethane is particularly preferred.

These polycarbonates are produced by reaction means known per se for producing an ordinary aromatic polycarbonate, for example, reacting an aromatic dihydroxy component with a carbonate precursor such as phosgene or a diester carbonate. A brief description is given of basic means for this production process.

A reaction in which phosgene is used as the carbonate precursor is generally carried out in the presence of an acid binder and a solvent. As the acid binder may be used an alkali metal hydroxide such as sodium hydroxide or potassium hydroxide, or an amine compound such as pyridine. As the solvent may be used a halogenated hydrocarbon such as methylene chloride or chlorobenzene. A catalyst such as a tertiary amine or a quaternary ammonium salt may be used to promote the reaction. The reaction temperature is generally 0 to 40°C, and the reaction time is several minutes to 5 hours.

A transesterification reaction in which a diester carbonate is used as the carbonate precursor is carried out by stirring an aromatic dihydroxy component and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is completed while the formed alcohol or phenol is distilled off by setting a reduced pressure from the beginning. A catalyst which is used for an ordinary transesterification reaction may be used to promote the reaction.

Examples of the diester carbonate used in the above transesterification reaction include diphenyl carbonate, dinaphthyl carbonate, bis(diphenyl)carbonate, dimethyl carbonate, diethyl carbonate and dibutyl carbonate. Out of these, diphenyl carbonate is particularly preferred.

In the present invention, an end-sealing agent is used in the polymerization reaction. The end-sealing agent is used to control the molecular weight, and the obtained polycarbonate is superior in heat stability to a polycarbonate whose end is not sealed. Examples of the end-sealing agent include monofunctional phenols represented by the following formulas [6] to [8].

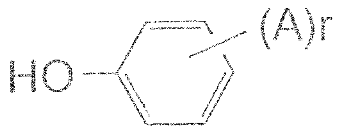

[6]

[In the above formula, A is a hydrogen atom, alkyl group having 1 to 9 carbon atoms, alkylphenyl group (alkyl moiety has 1 to 9 carbon atoms), phenyl group or phenylalkyl group (alkyl moiety has 1 to 9 carbon atoms), and "r" is an integer of 1 to 5, preferably 1 to 3.]

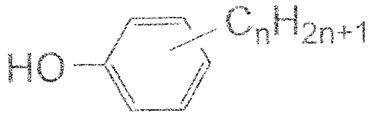

[7]

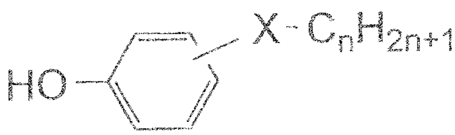

[8]

[In the above formulas, X is -R-O-, -R-CO-O- or -R-O-CO-. R is a single bond or a divalent aliphatic hydrocarbon group having 1 to 10, preferably 1 to 5 carbon atoms, and "n" is an integer of 10 to 50.]

Examples of the monofunctional phenol represented by the above formula (6) include phenol, isopropylphenol, p-tert-butylphenol, p-cresol, p-cumylphenol, 2-phenylphenol, 4-phenylphenol and isooctylphenol.

The monofunctional phenols represented by the above formulas [7] and [8] are phenols having a long-chain alkyl group or an aliphatic ester group as a substituent. When the end of the polycarbonate is sealed by using these, they not only serve as an end-sealing agent or a molecular weight control agent but also have the effects of improving the melt flowability of the resin to facilitate molding and reducing the water absorption of the resin. Therefore, they are preferably used.

The substituted phenol represented by the above formula [7] is preferably a phenol in which "n" is 10 to 30, particularly preferably 10 to 26, as exemplified by decylphenol, dodecylphenol, tetradecylphenol, hexadecylphenol, octadecylphenol, eicosylphenol, docosylphenol and triacontylphenol.

The substituted phenol of the above formula [8] is suitably a compound in which X is -R-CO-O- and R is a single bond, preferably a compound in which "n" is 10 to 30, specifically 10 to 26, as exemplified by decyl hydroxybenzoate, dodecyl hydroxybenzoate, tetradecyl hydroxybenzoate, hexadecyl hydroxybenzoate, eicosyl hydroxybenzoate, docosyl hydroxybenzoate and triacontyl hydroxybenzoate.

Out of these monofunctional phenols, monofunctional phenols represented by the above formula [6] are preferred, alkyl-substituted or phenylalkyl-substituted phenols are more preferred, and p-tert-butylphenol, p-cumylphenol and 2-phenylphenol are particularly preferred. The monofunctional phenol end-sealing agent is desirably introduced into terminals which account for at least 5 mol%, preferably at least 10 mol% of the total of all the terminals of the obtained polycarbonate. The end-sealing agents may be used alone or in combination of two or more.

The polycarbonate (component A) may be a polyester carbonate obtained by copolymerizing an aromatic dicarboxylic acid, for example, terephthalic acid, isophthalic acid, naphthalenedicarboxylic acid or a derivative thereof as long as the object of the present invention is not impaired.

The viscosity average molecular weight of the polycarbonate (component A) is preferably 11,000 to 50,000, more preferably 12,000 to 30,000, much more preferably 12, 000 to 25,000 and most preferably 12,000 to 22,000.

When the molecular weight is higher than 50,000, melt viscosity becomes too high, whereby moldability may deteriorate, and when the molecular weight is lower than 11,000, there may occur a problem with mechanical strength. The viscosity average molecular weight M as used in the present invention is obtained by first measuring a solution prepared by dissolving 0.7 g of the polycarbonate in 100 ml of methylene chloride at 20°C with an Ostwald viscometer to calculate its specific viscosity from the following equation and then inserting the obtained specific viscosity into the following equation.

$$\text{Specific viscosity } (\eta_{sp}) = (t - t_0)/t_0$$

[$t_0$ is the number of seconds during which methylene chloride drops and t is the number of seconds during which a sample solution drops]

$$\eta_{sp}/c = [\eta] + 0.45 \times [\eta]^2 c$$ ([η] represents an intrinsic viscosity)

$[\eta] = 1.23 \times 10^{-4} M^{0.83}$
c = 0.7

The total Cl (chlorine) content of the polycarbonate (component A) in the resin is preferably 0 to 200 ppm and more preferably 0 to 150 ppm. When the total Cl content of the polycarbonate exceeds 200 ppm, hue and heat stability degrade disadvantageously.

(component B: polycarbonate-polydiorganosiloxane copolymer)

In the polycarbonate-polydiorganosiloxane copolymer (component B), polydiorganosiloxane domains having an average size of 0.5 to 40 nm are existent in the polycarbonate matrix.

The average size of the polydiorganosiloxane domains is 0.5 to 40 nm. The average size of the domains is preferably 0.5 to 30 nm, more preferably 0.5 to 18 nm, much more preferably 2.0 to 18 nm and most preferably 5.0 to 18 nm. When the average size is less than 0.5 nm, the component B does not have the effect of improving in-plane color difference and light guiding properties, and when the average size is more than 40 nm, the component B becomes cloudy, whereby total light transmittance may degrade and light guiding properties may not be obtained disadvantageously.

The polydiorganosiloxane domains having an average size of 0.5 to 40 nm can be obtained by adding a dihydroxyaryl-terminated polydiorganosiloxane (II) having an average number of repetitions of a dimethylsiloxane unit constituting the carbonate constituent unit represented by the above formula (4) of 40 at a fixed rate based on the amount of a dihydroxy compound (I) constituting the carbonate constituent unit represented by the above formula (2) when the compound (I) is mixed with the compound (II). That is, the addition rate of the compound (II) is preferably 0.0001 to 0.01 mol/min, more preferably 0.0001 to 0.005 mol/min and much more preferably 0.0002 to 0.0025 mol/min based on 1 mole of the compound (I).

The average size of the polydiorganosiloxane domains is measured by a small angle X-ray scattering (SAXS) method. The small angle X-ray scattering method is a method for measuring diffuse scattering diffraction which occurs in a small-angle area having a scattering angle (2θ) of less than 10°. In this small angle X-ray scattering method, when there are areas as large as 1 to 100 nm which differ in electron density in a substance, the diffuse scattering of X-ray due to the difference in electron density is measured. The particle diameter of an object to be measured is obtained based on this scattering angle and the scattering intensity.

In the case of a polycarbonate-polydiorganosiloxane copolymer having an agglomeration structure that the polydiorganosiloxane domains are dispersed in the polycarbonate matrix, the diffuse scattering of X-ray occurs due to the difference in electron density between the polycarbonate matrix and the polydiorganosiloxane domains. A small-angle X-ray scattering profile is obtained by measuring scattering intensity I at each scattering angle (2θ) of less than 10°, and simulation is carried out by using commercially available analytical software to obtain the average size of the polydiorganosiloxane domains from provisional particle sizes and a provisional particle size distribution model based on the assumption that the polydiorganosiloxane domains are spherical domains and there exist variations in particle size distribution. According to the small angle X-ray scattering method, the average size of the polydiorganosiloxane domains dispersed in the polycarbonate polymer matrix which cannot be measured accurately by observation through a transmission electron microscope can be measured accurately and easily with high reproducibility.

In the present invention, the average size of the polydiorganosiloxane domains in the component B does not change even when the component B is melt kneaded with the component A.

The component B contains a carbonate unit represented by the following formula (2) and an organosiloxane unit represented by the following formula (4). The content of the unit represented by the formula (2) in the component B is preferably 90 to 99.99 mol%, more preferably 95 to 99.99 mol%, much more preferably 98 to 99.99 mol% and most preferably 98 to 99.9 mol%. The content of the unit represented by the formula (4) in the component B is preferably 0.01 to 10 mol%, more preferably 0.01 to 5 mol%, much more preferably 0.01 to 2 mol% and most preferably 0.1 to 2 mol%. Since the content of the unit of the formula (4) is lower than the content of the unit of the formula (2) in the component B, the unit of the formula (4) is existent in the block of the unit of the formula (2). (carbonate unit represented by the formula (2))

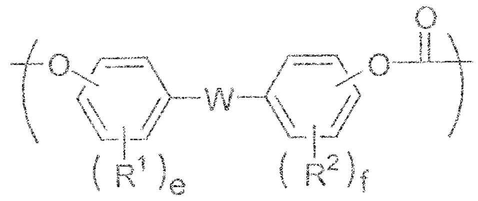 (2)

In the above formula (2), $R^1$ and $R^2$ are each independently a group selected from the group consisting of hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 3 to 14 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^{1}$' s and a plurality of $R^{2}$' s, "e" and "f" are each an integer of 1 to 4, and W is a single bond or at least one group selected from the group consisting of groups represented by the following formulas (3).

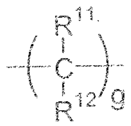 , 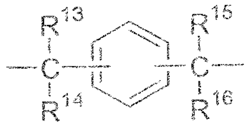 , 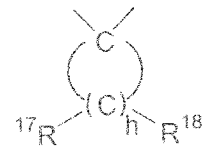 , —O— , —S— (3)

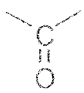 , 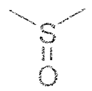 , 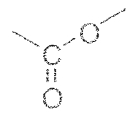 , 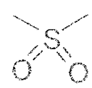 , 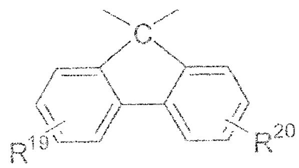

In the above formulas (3), $R^{11}$, $R^{12}$, $R^{13}$, $R^{14}$, $R^{15}$, $R^{16}$, $R^{17}$ and $R^{18}$ are each independently a group selected from the group consisting of hydrogen atom, alkyl group having 1 to 18 carbon atoms, aryl group having 3 to 14 carbon atoms and aralkyl group having 7 to 20 carbon atoms, $R^{19}$ and $R^{20}$ are each independently a group selected from the group consisting of hydrogen atom, halogen atom, alkyl group having 1 to 18 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^{19}$' s and a plurality of $R^{20}$'s, "g" is an integer of 1 to 10, and "h" is an integer of 4 to 7.

Preferably, $R^{11}$, $R^{12}$, $R^{13}$, $R^{14}$, $R^{15}$, $R^{16}$, $R^{17}$ and $R^{18}$ are each independently an alkyl group having 1 to 6 carbon atoms such as methyl group, ethyl group or propyl group.

Examples of the dihydric phenol (I) deriving the carbonate constituent unit represented by the above formula (2) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyl diphenol, 4,4'-dihydroxydiphenyl sulfoxide, 4,4'-dihydroxydiphenyl sulfide, 2,2'-dimethyl-4,4'-sulfonyl diphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyl diphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.0$^{2,6}$]decane, 4,4'-(1,3-adamantanedyl)diphenol and 1,3-bis(4-hydroxyphenyl)-5,7-dimethyladamantane.

Out of these, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyl diphenol, 9,9-bis(4-hydroxy-3-methylphenyl)fluorene, 1,3-bis{2-(4-hydroxyphenyl)propyl}benzene and 1,4-bis{2-(4-hydroxyphenyl)propyl}benzene are preferred, and 2,2-bis(4-hydroxypheny)propane, 1,1-bis(4-hydroxyphenyl)cyclohexane, 4,4'-sulfonyldiphenol and 9,9-bis(4-hydroxy-3-methylphenyl)fluorene are particularly preferred. 2,2-bis(4-hydroxyphenyl)propane having high strength and high durability is most preferred. They may be used alone or in combination of two or more.

(carbonate unit represented by the formula (4))

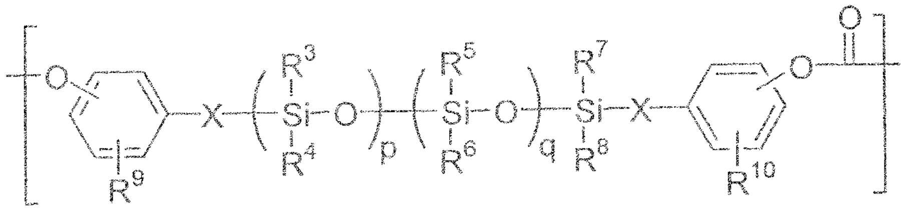

(4)

In the above formula (4), $R^3$, $R^4$, $R^5$, $R^6$, $R^7$ and $R^8$ are each independently a hydrogen atom, alkyl group having 1 to 12 carbon atoms, or substituted or nonsubstituted aryl group having 6 to 12 carbon atoms. Preferably, they are each a hydrogen atom, alkyl group having 1 to 6 carbon atoms, or substituted or nonsubstituted aryl group having 6 to 12 carbon atoms. Particularly preferably, they are each a hydrogen atom, alkyl group having 1 to 6 carbon atoms or phenyl group. Examples of the alkyl group having 1 to 12 carbon atoms include methyl group, ethyl group and t-butyl group. Examples of the aryl group include phenyl group.

$R^9$ and $R^{10}$ are each independently a hydrogen atom, halogen atom, alkyl group having 1 to 10 carbon atoms or alkoxy group having 1 to 10 carbon atoms. Preferably, they are each a hydrogen atom or alkyl group having 1 to 10 carbon atoms. Particularly preferably, they are each a hydrogen atom or alkyl group having 1 to 4 carbon atoms. Examples of the alkyl group having 1 to 14 carbon atoms include methyl group, ethyl group and t-butyl group. Examples of the alkoxy group having 1 to 10 carbon atoms include methoxy group, ethoxy group and t-butoxy group.

"p" is a natural number, "q" is 0 or a natural number, and (p+q) is a natural number of not more than 150. (p+q) is preferably 4 to 120, more preferably 30 to 120 and most preferably 30 to 100.

X is a divalent aliphatic group having 2 to 8 carbon atoms. X is preferably an alkylene group having 2 to 8 carbon atoms such as ethylene group or trimethylene group.

Compounds represented by the following formulas (I) are advantageously used as the dihydroxyaryl-terminated polydiorganosiloxane (II) deriving the carbonate constituent unit represented by the above formula (4).

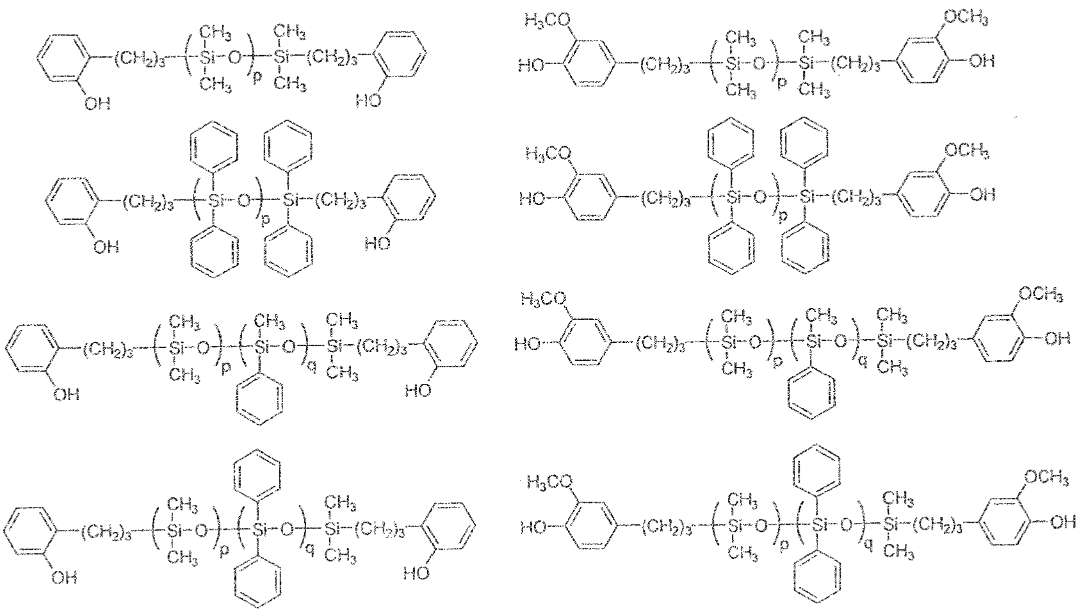

(I)

"p" and "q" which indicate the polymerization degree of diorganosiloxane are each a natural number, and (p+q) is a natural number of not more than 150, preferably 4 to 120, more preferably 30 to 120, particularly preferably 30 to

100 and most preferably 30 to 80.

The content of the polydiorganosiloxane component is preferably 0.01 to 20.0 wt%, more preferably 0.01 to 10.0 wt%, much more preferably 2.0 to 10.0 wt% and most preferably 2.0 to 8.0 wt% based on the total weight of the polycarbonate-polydiorganosiloxane copolymer (component B). When the content of the polydiorganosiloxane component is lower than 0.01 wt%, the in-plane color difference improving effect becomes unsatisfactory, and when the content is higher than 20.0 wt%, total light transmittance degrades, whereby light-guiding ability may not be obtained. The polymerization degree of the diorganosiloxane and the content of the polydiorganosiloxane component can be calculated by $^{1}$H-NMR measurement.

A description is subsequently given of the process of producing the above preferred polycarbonate-polydiorganosiloxane copolymer (component B).

A chloroformate compound containing a chloroformate of the dihydric phenol (I) and a carbonate oligomer of the dihydric phenol (I) having a terminal chloroformate group is produced by reacting the dihydric phenol (I) deriving the carbonate constituent unit represented by the above formula (2) with a carbonate precursor material.

To form the chloroformate compound from the dihydric phenol (I), the whole amount of the dihydric phenol (I) deriving the carbonate constituent unit represented by the above general formula (2) may be used at a time, or part of the dihydric phenol (I) may be added as a post-addition monomer to the subsequent interfacial polycondensation reaction as a reaction raw material. The post-addition monomer is added to accelerate the subsequent polycondensation reaction and does not need to be added when not required.

This chloroformate compound forming reaction method is not particularly limited but preferably carried out in a solvent in the presence of an acid binder. A small amount of an antioxidant such as sodium phosphite or hydrosulfide may be further added as required and is preferably added. The amount of the carbonate precursor material may be suitably adjusted in consideration of the stoichiometric proportion (equivalent) of the reaction. When phosgene which is a preferred carbonate precursor material is used, gasified phosgene is preferably blown into the reaction system.

As the above acid binder may be used an alkali metal hydroxide such as sodium hydroxide or potassium hydroxide, an alkali metal carbonate such as sodium carbonate or potassium carbonate, an organic base such as pyridine, or a mixture thereof.

The amount of the acid binder may also be suitably determined in consideration of the stoichiometric proportion (equivalent) of the reaction. More specifically, 2 equivalents or a little more than that of the acid binder is preferably used based on 1 mole (generally, 1 mole is equivalent to 2 equivalents) of the dihydric phenol (I) used to form the chloroformate compound of the dihydric phenol (I).

As the above solvent, various solvents which are inactive to the reaction and used to produce known polycarbonates may be used alone or as a mixture. Typical examples thereof include hydrocarbon solvents such as xylene and halogenated hydrocarbon solvents such as methylene chloride and chlorobenzene. Halogenated hydrocarbon solvents such as methylene chloride are particularly preferably used.

The pressure in the chloroformate compound forming reaction is not particularly limited and may be normal, increased or reduced pressure. In general, it is advantageous that the reaction should be carried out under normal pressure. The reaction temperature is selected from a range of -20 to 50°C. Since heat is generated by the reaction in many cases, water cooling or ice cooling is desirably carried out. The reaction time is affected by other conditions and cannot be specified unconditionally but generally 0.2 to 10 hours.

The pH range in the chloroformate compound forming reaction can be set by making use of known interfacial reaction conditions and is generally adjusted to not less than 10.

In the production of the polycarbonate-polydiorganosiloxane copolymer resin used as the component B of the present invention, after a mixed solution of the chloroformate compound containing the chloroformate of the dihydric phenol (I) and the carbonate oligomer of the dihydric phenol (I) having a terminal chloroformate group is prepared, the dihydroxyaryl-terminated polydiorganosiloxane (II) deriving the carbonate constituent unit represented by the above formula [4] is added at a rate of not more than 0.01 mol/min based on 1 mole of the dihydric phenol (I) charged to prepare the above mixed solution while the mixed solution is stirred to carry out the interfacial polycondensation of the hydroxyaryl-terminated polydiorganosiloxane (II) and the chloroformate compound so as to obtain a polycarbonate-polydiorganosiloxane copolymer. Although the present invention is not limited by any theory, a reason that the predetermined domain sizes can be reduced by this process is assumed as follows.

In the prior art process, as phosgene is reacted with a mixture of the dihydric phenol (I) and the hydroxyaryl-terminated polydiorganosiloxane (II), a block copolymer having a long chain composed of only one of the monomers is readily formed due to the difference in reactivity between the dihydric phenol (I) and the hydroxyaryl-terminated polydiorganosiloxane (II). Further, a structure that the hydroxyaryl-terminated polydiorganosiloxane (II) is bonded through a short-chain carbonate oligomer composed of the dihydric phenol (I) is readily formed. Meanwhile, the aforementioned process makes it possible to suppress a rapid increase in the concentration of the hydroxyaryl-terminated polydiorganosiloxane (II) with the result that a reaction between the monomer and the carbonate oligomer of the dihydric phenol (I) having a terminal chloroformate group is promoted steadily to reduce the amount of unreacted hydroxyaryl-terminated

polydiorganosiloxane (II). It is considered that this reduction eliminates the difference in reactivity between the dihydric phenol (I) and the hydroxyaryl-terminated polydiorganosiloxane (II) and reduces the probability of forming the block copolymer having a long chain composed of only one of the monomers and the structure that the hydroxyaryl-terminated polydiorganosiloxane (II) is bonded through the short-chain carbonate oligomer composed of the dihydric phenol (I). It is presumed that a polycarbonate-polydiorganosiloxane copolymer having small polydiorganosiloxane domains is thereby obtained. When the addition rate of the aforementioned hydroxyaryl-terminated polydiorganosiloxane (II) is higher than 0.01 mol/min, the sizes of the polydiorganosiloxane domains dispersed in a molded article of the obtained polycarbonate-polydiorganosiloxane copolymer exceed 40 nm. That is, turbidity occurs, whereby total light transmittance degrades and light guiding properties may not be obtained.

When the addition rate of the above hydroxyaryl-terminated polydiorganosiloxane (II) is lower than 0.0001 molar equivalent/min, it is not preferred from the viewpoint of production efficiency and the content of the polydiorganosiloxane component in the obtained copolymer becomes low, whereby the molecular weight tends to vary disadvantageously. Therefore, the lower limit of the addition rate of the hydroxyaryl-terminated polydiorganosiloxane (II) is substantially 0.0001 molar equivalent/min. The addition rate of the hydroxyaryl-terminated polydiorganosiloxane (II) is more preferably not more than 0.005 mol/min and much more preferably not more than 0.0025 mol/min based on 1 mole of the dihydric phenol (I) charged to prepare the mixed solution, and the lower limit is more preferably not less than 0.0002 mol/min.

To enhance uniform dispersibility, the hydroxyaryl-terminated polydiorganosiloxane (II) is desirably mixed with a solvent and injected into the mixed solution containing a terminal chloroformate compound as a solution. The concentration of the solution is desirably low as long as the reaction is not impeded, preferably 0.2 to 0.01 mol/L and more preferably 0.1 to 0.02 mol/L. Although the solvent is not particularly limited, a solvent which is the same as the solvent used for the reaction for forming the above chloroformate compound is preferred, and methylene chloride is particularly preferred.

To carry out the interfacial polycondensation reaction, the acid binder may be suitably added in consideration of the stoichiometric proportion (equivalent) of the reaction. As the acid binder may be used an alkali metal hydroxide such as sodium hydroxide or potassium hydroxide, an alkali metal carbonate such as sodium carbonate or potassium carbonate, an organic base such as pyridine, or a mixture thereof. More specifically, when the hydroxyaryl-terminated polydiorganosiloxane (II) or part of the dihydric phenol (I) as a post-addition monomer is added in this reaction stage, an alkali is preferably used in an amount of 2 equivalents or more than that based on the total number of moles (generally, 1 mole is equivalent to 2 equivalents) of the dihydric phenol (I) as the post-addition monomer and the hydroxyaryl-terminated polydiorganosiloxane (II).

The interfacial polycondensation reaction between the oligomer of the dihydric phenol (I) and the hydroxyaryl-terminated polydiorganosiloxane (II) is carried out by violently stirring the above mixed solution.

In the polycondensation reaction, an end-sealing agent or a molecular weight control agent is generally used. Examples of the end-sealing agent include monofunctional phenols represented by the above formulas [6] to [8]. Out of these monofunctional phenols, monofunctional phenols represented by the above formula [6] are preferred, alkyl-substituted or phenylalkyl-substituted phenols are more preferred, and p--tert-butylphenol, p-cumylphenol and 2-phenylphenol are particularly preferred.

The amount of the monofunctional phenol is 100 to 0.5 mole and preferably 50 to 2 moles based on 100 moles of the total of all the dihydric phenol-based compounds, and two or more compounds may be used in combination as a matter of course.

To promote the polycondensation reaction, a catalyst such as a tertiary amine exemplified by triethylamine or a quaternary ammonium salt may be added and is preferably added. Triethylamine is particularly preferably used.

The polymerization reaction time must be relatively prolonged to obtain a predetermined polydiorganosiloxane domain size. It is preferably 30 minutes or longer and more preferably 50 minutes or longer. The upper limit of the time is preferably 2 hours or shorter and more preferably 1.5 hours or shorter from the viewpoint of production efficiency.

The polycarbonate-polydiorganosiloxane copolymer used as the component B of the present invention may be obtained as a branched polycarbonate-polydiorganosiloxane copolymer by using a branching agent in combination with the above dihydric phenol-based compound. Examples of a polyfunctional aromatic compound having 3 or more functional groups used in the branched polycarbonate-polydiorganosiloxane copolymer include phloroglucin, phloroglucide, trisphenols such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol and 4-{4-[1,1-bis(4-hydroxyphenyl)ethyl]benzene}-$\alpha$,$\alpha$-dimethy Ibenzyl phenol, tetra(4-hydroxyphenyl)methane, bis(2,4-dihydroxyphenyl)ketone, 1,4-bis(4,4-dihydroxytriphenylmethyl)benzene, trimellitic acid, pyromellitic acid, benzophenonetetracarboxylic acid and acid chlorides thereof. Out of these, 1,1,1-tris(4-hydroxyphenyl)ethane and 1,1,1-tris(3,5-dimethyl-4-hydroxyphenyl)ethane are preferred and 1,1,1-tris(4-hydroxyphenyl)ethane is particularly preferred.

The process for producing the branched polycarbonate-polydiorganosiloxane copolymer may be one in which

a branching agent is contained in a mixed solution during a reaction for forming a chloroformate compound, or one in which a branching agent is added during an interfacial polycondensation reaction after the end of the forming reaction. The content of a carbonate constituent unit derived from the branching agent is preferably 0.005 to 1.5 mol%, more preferably 0.01 to 1.2 mol% and particularly preferably 0.05 to 1.0 mol% based on the total amount of all the carbonate constituent units constituting the copolymer. The amount of the branched structure can be calculated by $^1$H-NMR measurement.

Although the inside pressure in the polycondensation reaction system may be reduced, normal or increased pressure, the polycondensation reaction can be advantageously carried out under normal pressure or the own pressure of the reaction system. The reaction temperature is selected from a range of -20 to 50°C. Since heat is generated by polymerization in many cases, water cooling or ice cooling is desirably carried out. Since the reaction time differs according to the reaction temperature and other conditions, it cannot be specified unconditionally but generally 0.5 to 10 hours.

As the case may be, a polycarbonate-polydiorganosiloxane copolymer having a desired reduced viscosity $[\eta]_{sp}/c]$ can be obtained by subjecting the obtained polycarbonate copolymer to a suitable physical treatment (such as mixing or fractionation) and/or a chemical treatment (such as a polymer reaction, crosslinking or partial decomposition).

A polycarbonate-polydiorganosiloxane copolymer having desired purity (refining degree) can be collected by subjecting the obtained reaction product (crude product) to various known post-treatments such as separation and refinement.

The viscosity average molecular weight of the polycarbonate-polydiorganosiloxane copolymer (component B) is preferably 12,000 to 30,000, more preferably 12,000 to 25,000 and much more preferably 12,000 to 22,000. When the molecular weight is higher than 30,000, melt viscosity becomes too high and therefore moldability may deteriorate. When the molecular weight is lower than 12,000, there may occur a problem with mechanical strength.

The viscosity average molecular weight of the polycarbonate-polydiorganosiloxane copolymer (component B) is calculated as follows. The specific viscosity ($\eta_{sp}$) calculated from the following equation is first obtained from a solution prepared by dissolving 0.7 g of the polycarbonate-polydiorganosiloxane copolymer in 100 ml of methylene chloride at 20°C by using an Ostwald viscometer, and then the viscosity average molecular weight Mv is calculated from the obtained specific viscosity ($\eta_{sp}$) based on the following equation.

$$\text{Specific viscosity } (\eta_{sp}) = (t - t_0)/t_0$$

[$t_0$ is the number of seconds during which methylene chloride drops and t is the number of seconds during which a sample solution drops]

$$\eta_{sp}/c = [\eta] + 0.45 \times [\eta]^2 c \quad ([\eta] \text{ represents an intrinsic viscosity})$$

$[\eta] = 1.23 \times 10^{-4} Mv^{0.83}$
c = 0.7

The content of the polydiorganosiloxane block represented by the following formula [5] contained in the above formula (4) in the component B is preferably 0.001 to 1.0 wt%, more preferably 0.01 to 0. 8 wt%, much more preferably 0.01 to 0.6 wt% and most preferably 0.01 to 0.2 wt% based on the total weight of the polycarbonate resin composition. When the content is lower than 0.001 wt%, the in-plane color difference improving effect is not obtained, and when the content is higher than 1.0 wt%, total light transmittance degrades and light-guiding ability may not be obtained disadvantageously.

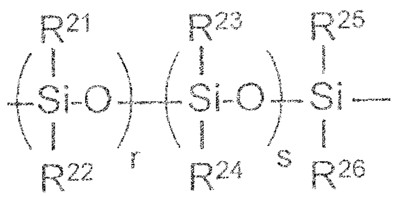
(5)

In the above formula (5), $R^{21}$, $R^{22}$, $R^{23}$, $R^{24}$, $R^{25}$ and $R^{26}$ are identical to $R^3$, $R^4$, $R^5$, $R^6$, $R^7$ and $R^8$ of the formula (4), respectively. "r" is the same as "p". "s" is the same as "q". (r+s) is the same as (p+q).

The content of the component B is adjusted to ensure that the content of the polydiorganosiloxane component in the component B falls within the above preferred range. The content of the component B is preferably 0.01 to 20.0 parts by weight, more preferably 0.01 to 10.0 parts by weight, much more preferably 0.01 to 5.0 parts by weight, particularly preferably 0.1 to 5.0 parts by weight and most preferably 0.1 to 2.0 parts by weight based on 100 parts by weight of the polycarbonate (component A). When the content of the component B is lower than 0.01 part by weight, the effect of improving in-plane color difference and light guiding properties is not obtained, and when the content of the component B is higher than 10.0 parts by weight, total light transmittance degrades, whereby light guiding properties may not be obtained disadvantageously.

(component C: stabilizer)

The stabilizer used as the component C of the present invention is a stabilizer represented by the following formula (1).

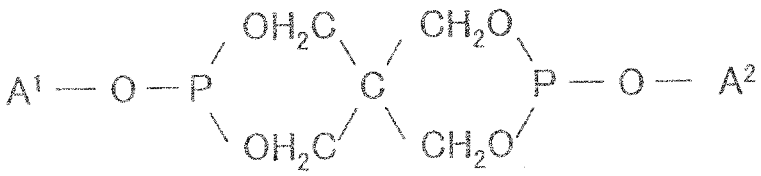

(1)

In the formula (1), $A^1$ and $A^2$ are each independently an aryl group or alkyl group and may be the same or different.
When $A^1$ and $A^2$ in the formula (1) are both aryl groups, they are preferably aryl groups having 6 to 30 carbon atoms, more preferably aryl groups having 6 to 20 carbon atoms and much more preferably aryl groups having 6 to 10 carbon atoms. Examples of the stabilizer include dinonylphenyl pentaerythritol diphosphite, bis(2,4-di-tert-butylphenyl)pentaerythritol diphosphite, bis(2,4-di-tert-butyl-6-methylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite and bis(2,4-dicumylphenyl)pentaerythritol diphosphite. Out of these, bis(2,4-di-tert-butylphenyl)pentaerythritol diphosphate and bis(2,6-di-tert-butyl-4-methylphenyl)pentaerythritol diphosphite are preferred. When $A^1$ and $A^2$ in the formula (1) are both alkyl groups, they are preferably alkyl groups having 1 to 30 carbon atoms, more preferably alkyl groups having 6 to 30 carbon atoms and much more preferably alkyl groups having 6 to 20 carbon atoms.
More specifically, dioctyl pentaerythritol diphosphite, dicyclohexyl pentaerythritol diphosphite, distearyl pentaerythritol diphosphite and dibehenyl pentaerythritol diphosphite are used. Out of these, distearyl pentaerythritol diphosphite is particularly preferably used. The stabilizers used as the component C of the present invention may be used alone or in combination of two or more.
The content of the component C is 0.01 to 1.0 part by weight, preferably 0.01 to 0.5 part by weight, more preferably 0.01 to 0.3 part by weight, much more preferably 0.01 to 0.1 part by weight and most preferably 0.01 to 0.05 part by weight based on 100 parts by weight of the total of the components A and B. When the content of the component C is higher than 1.0 part by weight, a mold deposit is produced, which tends to become disadvantageous in terms of cost. When the content is lower than 0.01 part by weight, the hue improving effect becomes small disadvantageously.

(other additives)

Additives which are used to improve resin compositions are advantageously used to improve the flame retardancy, light diffusing properties, antioxidant properties, optical stability (ultraviolet stability), fluorescent brightening properties, releasability and mold corrosion resistance of the resin composition of the present invention. A detailed description is subsequently given of these additives.

(I) Flame retardant

The resin composition of the present invention may be mixed with a compound which is known as a flame retardant for polycarbonates. Although flame retardancy is improved by mixing the compound, antistatic properties, flowability, stiffness and heat stability are improved based on the properties of the compound in addition to this. Examples of the flame retardant include (i) organic metal salt-based flame retardants (such as organic sulfonic acid alkali (earth) metal salts, organic boric acid metal salt-based flame retardants and organic stannic acid metal salt-based flame retardants), (ii) organic phosphorus-based flame retardants (such as organic group-containing monophosphate compounds, phosphate oligomer compounds, phosphonate oligomer compounds, phosphonitrile oligomer compounds and phosphonic acid amide compounds), (iii) silicone-based flame retardants comprising a silicone compound, and (iv)

fibrillated PTFE. Out of these, organic metal salt-based flame retardants and organic phosphorus-based flame retardants are preferred.

(i) Organic metal salt-based flame retardants

The organic metal salt compound is an alkali (earth) metal salt of an organic acid having 1 to 50, preferably 1 to 40 carbon atoms, preferably an alkali (earth) metal salt of organic sulfonic acid. Examples of this alkali (earth) metal salt of organic sulfonic acid include metal salts of a fluorine-substituted alkylsulfonic acid such as metal salts of a perfluoroalkylsulfonic acid having 1 to 10, preferably 2 to 8 carbon atoms and an alkali metal or an alkali earth metal. Metal salts of an aromatic sulfonic acid having 7 to 50, preferably 7 to 40 carbon atoms and an alkali metal or an alkali earth metal are also included.

Examples of the alkali metal constituting the metal salt include lithium, sodium, potassium, rubidium and cesium. Examples of the alkali earth metal include beryllium, magnesium, calcium, strontium and barium. Alkali metals are more preferred. Out of these alkali metals, rubidium and cesium having a larger ion radius are preferred when the requirement for transparency is higher. However, as they cannot be used for all purposes and it is difficult to refine them, they may become disadvantageous in terms of cost. Meanwhile, metals having a smaller ion radius such as lithium and sodium may become disadvantageous in terms of flame retardancy. In consideration of these, an alkali metal contained in the sulfonic acid alkali metal salt may be used for each purpose but a sulfonic acid potassium salt having good balance among properties is most preferred in all respects. This potassium salt and a sulfonic acid alkali metal salt comprising another alkali metal may be used in combination.

Examples of the perfluoroalkylsulfonic acid alkali metal salt include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate and rubidium perfluorohexanesulfonate. They may be used alone or in combination of two or more.

The number of carbon atoms of the perfluoroalkyl group is preferably 1 to 18, more preferably 1 to 10 and much more preferably 1 to 8. Out of these, potassium perfluorobutanesulfonate is particularly preferred. In general, a fluoride ion ($F^-$) is contained in the perfluoroalkylsulfonic acid alkali (earth) metal salt comprising an alkali metal in no small measure. Since the existence of the fluoride ion may cause the deterioration of flame retardancy, it is preferably reduced as much as possible. The content of the fluoride ion can be measured by ion chromatography. The content of the fluoride ion is preferably not more than 100 ppm, more preferably not more than 40 ppm and particularly preferably not more than 10 ppm. It is advantageously not less than 0.2 ppm from the viewpoint of production efficiency. A perfluoroalkylsufonic acid alkali (earth) metal salt whose fluoride ion content has been reduced can be produced by employing a known production process and a method for reducing the content of the fluoride ion, such as one in which the content of the fluoride ion in the raw material is reduced when a fluorine-containing organic metal salt is produced, one in which hydrogen fluoride obtained by a reaction is removed by a gas generated at the time of the reaction or heating, or one in which the amount of the fluoride ion is reduced by recrystallization and reprecipitation in the production of a fluorine-containing organic metal salt.

Since the organic metal salt-based flame retardant is relatively easily soluble in water, it is preferably produced by using ion exchange water, especially water having an electric resistance of not less than 18 $M\Omega \cdot cm$, that is, an electric conductivity of about not more than 0.55 $\mu S/cm$ to dissolve and clean it at a temperature higher than normal temperature and then cooling it for recrystallization.

Examples of the aromatic sulfonic acid alkali (earth) metal salt include disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenylether disulfonate, polysodium poly(2,6-dimethylphenyleneoxide)polysulfonate, polysodium poly(1,3-phenyleneoxide)polysulfonate, polysodium poly(1,4-phenyleneoxide)polysulfonate, polypotassium poly(2,6-diphenylphenyleneoxide)polysulfonate, lithium poly(2-fluoro-6-butylphenyleneoxide)polysulfonate, potassium sulfonate of benzenesulfonate, sodium benzenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium $\alpha,\alpha,\alpha$-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, formalin condensate of sodium naphthalenesulfonate, and formalin condensate of sodium anthracenesulfonate. Out of these aromatic sulfonic acid alkali (earth) metal salts, potassium salts are preferred. Out of these aromatic sulfonic acid alkali (earth) metal salts, potassium diphenylsufone-3-sulfonate and dipotassium diphenylsulfone-3,3'-disulfonate are more preferred. A mixture thereof (the weight ratio of

the former to the latter is 15/85 to 30/70) is particularly preferred.

Preferred organic metal salts except for the sulfonic acid alkali (earth) metal salts include alkali (earth) metal salts of a sulfuric acid ester and alkali (earth) metal salts of an aromatic sulfonamide. The alkali (earth) metal salts of a sulfuric acid ester include alkali (earth) metal salts of a sulfuric acid ester of a monohydric and/or polyhydric alcohol. Examples of the sulfuric acid ester of a monohydric and/or polyhydric alcohol include methyl sulfuric acid esters, ethyl sulfuric acid esters, lauryl sulfuric acid esters, hexadecyl sulfuric acid esters, sulfuric acid esters of a polyoxyethylene alkylphenyl ether, mono-, di-, tri- and tetra-sulfuric acid esters of pentaerythritol, sulfuric acid esters of monoglyceride laurate, sulfuric acid esters of monoglyceride palmitate and sulfuric acid esters of monoglyceride stearate. Out of these alkali (earth) metal salts of sulfuric acid esters, alkali (earth) metal salts of a lauryl sulfuric acid ester are particularly preferred.

The alkali (earth) metal salts of an aromatic sulfonamide include alkali (earth) metal salts of saccharin, N-(p-tolylsufonyl)-p-toluenesulfoimide, N-(N'-benzylaminocarbonyl)sulfanilimide and N-(phenylcarboxyl)sulfanilimide.

The content of the organic metal salt-based flame retardant is preferably 0.001 to 1 part by weight, more preferably 0.005 to 0.5 part by weight, much more preferably 0.01 to 0.3 part by weight and particularly preferably 0.03 to 0.15 part by weight based on 100 parts by weight of the resin composition.

(ii) Organic phosphorus-based flame retardant

The organic phosphorus-based flame retardant is preferably an aryl phosphate compound. This is because the phosphate compound is generally excellent in hue. Since the phosphate compound has a plasticizing effect, it can improve moldability advantageously. Various phosphate compounds which have been known as flame retardants may be used as the phosphate compound. The content of the organic phosphorus-based flame retardant is preferably 0.01 to 20 parts by weight, more preferably 2 to 10 parts by weight and much more preferably 2 to 7 parts by weight based on 100 parts by weight of the resin composition.

(iii) Silicone-based flame retardant

A silicone compound which is used as the silicone-based flame retardant improves flame retardancy through its chemical reaction at the time of combustion. Various compounds which have been proposed as flame retardants for aromatic polycarbonates may be used as the compound. It is considered that the silicone compound provides a flame retarding effect to a polycarbonate by bonding itself or to a component derived from the resin at the time of combustion to form a structure or through a reduction reaction at the time of forming the structure. Therefore, it is preferred that the silicone compound should contain a highly active group, specifically a predetermined amount of at least one group selected from an alkoxy group and hydrogen (that is, Si-H group) at the time of the reaction. The content of the group (alkoxy group, Si-H group) is preferably 0.1 to 1.2 mol/100 g, more preferably 0.12 to 1 mol/100 g and much more preferably 0.15 to 0.6 mol/100 g. This content can be obtained by measuring the amount of hydrogen or an alcohol generated per unit weight of the silicone compound by an alkali decomposition method. The alkoxy group is preferably an alkoxy group having 1 to 4 carbon atoms, particularly preferably methoxy group. The structure of the silicone compound is generally constituted by combining the following four different siloxane units arbitrarily. That is, they are:

M units: monofunctional siloxane units such as $(CH_3)_3SiO_{1/2}$, $H(CH_3)_2SiO_{1/2}$, $H_2(CH_3)SiO_{1/2}$, $(CH_3)_2(CH_2{=}CH)SiO_{1/2}$, $(CH_3)_2(C_6H_5)SiO_{1/2}$ and $(CH_3)(C_6H_5)(CH_2{=}CH)SiO_{1/2}$ D units: bifunctional siloxane units such as $(CH_3)_2SiO$, $H(CH_3)SiO$, $H_2SiO$, $H(C_6H_5)SiO$, $(CH_3)(CH_2{=}CH)SiO$ and $(C_6H_5)_2SiO$ T units: trifunctional siloxane units such as $(CH_3)SiO_{3/2}$, $(C_3H_7)SiO_{3/2}$, $HSiO_{3/2}$, $(CH_2{=}CH)SiO_{3/2}$ and $(C_6H_5)SiO_{3/2}$ Q unit: tetrafunctional siloxane unit represented by $SiO_2$

The structure of the silicone compound used as the silicone-based flame retardant is represented by $D_n$, $T_p$, $M_mD_n$, $M_mT_p$, $M_mQ_q$, $M_mD_nT_p$, $M_mD_nQ_q$, $M_mT_pQ_q$, $M_mD_nT_pQ_q$, $D_nT_p$, $D_nQ_q$ or $D_nT_pQ_q$. Out of these, the structure of the silicone compound is represented by preferably $M_mD_n$, $M_mT_p$, $M_mD_nT_p$ or $M_mD_nQ_q$ and more preferably $M_mD_n$ or $M_mD_nT_p$.

The coefficients m, n, p and q in the above rational formulae are each an integer of not less than 1, indicating the polymerization degree of the siloxane unit, and the total of these coefficients in the formulae is the average polymerization degree of the silicone compound. The average polymerization degree is preferably 3 to 150, more preferably 3 to 80, much more preferably 3 to 60 and particularly preferably 4 to 40. Within the more preferred range, higher flame retardancy is obtained. As will be described hereinafter, a silicone compound containing a predetermined amount of an aromatic group is also excellent in transparency and hue. As a result, good reflected light is obtained. When any one of m, n, p and q is not less than 2, two or more of the siloxane units having this coefficient may differ in the hydrogen atom or organic residue bonded thereto.

The silicone compound may have a linear or branched structure. The organic residue bonded to the silicon

atom has preferably 1 to 30 carbon atoms, more preferably 1 to 20 carbon atoms. Examples of the organic residue include alkyl groups such as methyl group, ethyl group, propyl group, butyl group, hexyl group and decyl group, cycloalkyl groups such as cyclohexyl group, aryl groups such as phenyl group, and aralkyl groups such as tolyl group. It is more preferably an alkyl group having 1 to 8 carbon atoms, alkenyl group or aryl group. The alkyl group is particularly preferably an alkyl group having 1 to 4 carbon atoms such as methyl group, ethyl group or propyl group. Further, the silicone compound used as the silicone-based flame retardant preferably contains an aryl group. A silane compound and a siloxane compound as organic surface treating agents for a titanium dioxide pigment are clearly distinguished from the silicone-based flame retardant as a preferred effect is obtained when they do not contain an aryl group. A silicone compound used as the silicone-based flame retardant may contain a reactive group in addition to the above Si-H group and alkoxy group. Examples of the reactive group include amino group, carboxyl group, epoxy group, vinyl group, mercapto group and methacryloxy group.

The content of the silicone-based flame retardant is preferably 0.01 to 20 parts by weight, more preferably 0.5 to 10 parts by weight and much more preferably 1 to 5 parts by weight based on 100 parts by weight of the resin composition.

(iv) Polytetrafluoroethylene having fibril formability (fibrillated PTFE)

Fibrillated PTFE may be fibrillated PTFE alone or a polytetrafluoroethylene-based mixture of fibrillated PTFE, that is, fibrillated PTFE particles and an organic polymer. The fibrillated PTFE has an extremely high molecular weight and tends to become fibrous through the bonding of PTFE's by an external function such as shear force. The number average molecular weight thereof is 1,500,000 to several tens of million. The lower limit of the number average molecular weight is preferably 3,000,000. The number average molecular weight is calculated based on the melt viscosity of polytetrafluoroethylene at 380°C as disclosed by JP-A 6-145520. That is, the fibrillated PTFE as the component B has a melt viscosity at 380°C measured by the method disclosed by the above publication of 107 to 1013 poise, preferably 108 to 1012 poise. The PTFE in a solid form or an aqueous dispersion form may be used. A PTFE mixture of the fibrillated PTFE and another resin may also be used to improve dispersibility in a resin and further obtain high flame retardancy and mechanical properties. As disclosed by JP-A 6-145520, a polymer having the fibrillated PTFE as the core and low-molecular weight polytetrafluoroethylene as the shell is preferably used as well.

Commercially available products of the fibrillated PTFE include the Teflon (registered trademark) 6J of Du Pont-Mitsui Fluorochemicals Co., Ltd. and the Polyfuron MPA FA500 and F-201L of Daikin Industries, Ltd. The fibrillated PTFE mixture may be obtained by (1) a method in which a fibrillated PTFE aqueous dispersion and an aqueous dispersion or solution of an organic polymer are mixed together and co-precipitation is carried out to obtain a coaggregated mixture (disclosed by JP-A 60-258263 and JP-A 63-154744), (2) a method in which a fibrillated PTFE aqueous dispersion and dried organic polymer particles are mixed together (disclosed by JP-A 4-272957), (3) a method in which a fibrillated PTFE aqueous dispersion and an organic polymer particle solution are mixed together uniformly and their media are removed from the obtained mixture at the same time (disclosed by JP-A 06-220210 and JP-A 08-188653), (4) a method in which a monomer for forming an organic polymer is polymerized in a fibrillated PTFE aqueous dispersion (disclosed by JP-A 9-95583), or (5) a method in which a PTFE aqueous dispersion and an organic polymer dispersion are mixed together uniformly and a vinyl-based monomer is polymerized in the mixed dispersion to obtain a mixture (disclosed by JP-A 11-29679).

Commercially available products of these fibrillated PTFE mixtures include the Metablen A series such as Metablen A3000 (trade name), Metablen A3700 (trade name) and Metablen A3800 (trade name) of Mitsubishi Rayon Co., Ltd., the SN3300B7 (trade name) of Shine Polymer Technology Co., Ltd., and the BLENDEX B449 (trade name) of GE Specialty Chemicals.

The content of the fibrillated PTFE in the mixture is preferably 1 to 95 wt%, more preferably 10 to 90 wt% and most preferably 20 to 80 wt% based on 100 wt% of the mixture.

When the content of the fibrillated PTFE in the mixture falls within the above range, the high dispersibility of the fibrillated PTFE can be obtained. The content of the fibrillated PTFE is preferably 0.001 to 0.2 part by weight, more preferably 0.01 to 0.2 part by weight and much more preferably 0.01 to 0.18 part by weight based on 100 parts by weight of the resin composition. "Parts by weight" shown above is the weight of the whole mixture in the case of the polytetrafluoroethylene mixture.

(II) Light diffusing agent

The resin composition of the present invention may be mixed with a compound which is known as a light diffusing agent for polycarbonates. The light diffusing agent may be either organic fine particles typified by polymer fine particles or inorganic fine particles. Typical examples of the polymer fine particles include crosslinked particles obtained by polymerizing a non-crosslinkable monomer and a crosslinkable monomer. Another copolymerizable monomer except

for the above monomers may also be used.

Polymer fine particles are preferred, and crosslinked particles may be particularly preferably used. Examples of the monomer used as the non-crosslinkable monomer in the crosslinked particles include non-crosslinkable vinyl-based monomers such as acrylic monomers, styrene-based monomers and acrylonitrile-based monomers, and olefin-based monomers. Methyl acrylate, ethyl acrylate, propyl acrylate, butyl acrylate, 2-ethylhexyl acrylate, methyl methacrylate, ethyl methacrylate, propyl methacrylate, butyl methacrylate, 2-ethylhexyl methacrylate and phenyl methacrylate may be used alone or in combination as the acrylic monomers. Out of these, methyl methacrylate is particularly preferred.

Styrene, alkyl styrenes such as α-methyl styrene, methyl styrene (vinyl toluene) and ethyl styrene, and halogenated styrenes such as brominated styrene may be used as the styrene-based monomers. Out of these, styrene is particularly preferred. Acrylonitrile and methacrylonitrile may be used as the acrylonitrile-based monomers.

Ethylene and norbornene compounds may be used as the olefin-based monomers. Further, examples of the other copolymerizable monomer include glycidyl methacrylate, N-methylmaleimide and maleic anhydride. The organic crosslinked particles may have a unit such as N-methyl glutarimide. Examples of the crosslinkable monomer to be used in combination with the non-crosslinkable vinyl-based monomer include divinyl benzene, allyl methacrylate, triallyl cyanurate, triallyl isocyanate, ethylene glycol di(meth)acrylate, diethylene glycol di(meth)acrylate, propylene glycol (meth)acrylate, 1,6-hexanediol di(meth)acrylate, trimethylolpropane (meth)acrylate, pentaerythritol tetra(meth)acrylate, bisphenol A di(meth)acrylate, dicyclopentanyl di(meth)acrylate, dicyclopentenyl di(meth)acrylate and N-methylol (meth)acrylamide.

The light diffusing agent used in the present invention has an average particle diameter of preferably 0.01 to 50 μm, more preferably 1 to 30 μm, much more preferably 2 to 30 μm. When the average particle diameter is smaller than 0.01 μm or larger than 50 μm, light diffusability may become unsatisfactory. The average particle diameter indicates a 50 % value (D50) of an integral particle size distribution obtained by a laser diffraction/scattering method. The number of particle size distributions may be single or plural. That is, it is possible to combine two or more different kinds of light diffusing agents which differ in average particle diameter. However, a more preferred light diffusing agent has a narrow particle size distribution. A diffusing agent having a distribution in which not less than 70 wt% of all particles are included in an average particle diameter range of around 2 μm is preferred. The shape of the light diffusing agent is preferably almost globular from the viewpoint of light diffusability and more preferably almost spherical. The globular shape includes an elliptical shape.

The refractive index of the light diffusing agent used in the present invention is preferably 1.30 to 1.80, more preferably 1.33 to 1. 70 and much more preferably 1. 35 to 1. 65. When it is contained in the resin composition, it exhibits a satisfactory light diffusing function.

The content of the light diffusing agent used in the present invention is preferably 0.005 to 10.0 parts by weight, more preferably 0.1 to 10.0 parts by weight, much more preferably 0.1 to 5.0 parts by weight and particularly preferably 0.1 to 2.0 parts by weight based on 100 parts by weight of the resin composition.

(III) Phosphorus-based stabilizer

The resin composition of the present invention may be mixed with a phosphorus-based stabilizer except for the component C as long as its hydrolyzability is not promoted. The phosphorus-based stabilizer improves heat stability at the time of production or molding as well as mechanical properties, hue and molding stability. The phosphorus-based stabilizer is selected from phosphorous acid, phosphoric acid, phosphonous acid, phosphonic acid and esters thereof, and a tertiary phosphine.

Examples of the phosphite compound include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite,2,2-methylenebis(4,6-di-tert-butylphenyl)octyl phosphite, tris(diethylphenyl)phosphite, tris(di-iso-propylphenyl)phosphite, tris(di-n-butylphenyl)phosphite, tris(2,4-di-tert-butylphenyl)phosphite and tris(2,6-di-tert-butylphenyl)phosphite.

Other phosphite compounds which react with a dihydric phenol and have a cyclic structure may also be used. The phosphite compounds include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite, 2,2'-methylenebis(4-methyl-6-tert-butylphenyl)(2-tert-butyl-4-methylphenyl)phosphite and 2,2'-ethylidenebis(4-methyl-6-tert-butylphenyl)(2-tert-butyl-4-methylphenyl)phosphite.

Examples of the phosphate compound include tributyl phosphate, trimethyl phosphate, tricresyl phosphate, triphenyl phosphate, trichlorophenyl phosphate, triethyl phosphate, diphenylcresyl phosphate, diphenylmonoorthoxenyl phosphate, tributoxyethyl phosphate, dibutyl phosphate, dioctyl phosphate and diisopropyl phosphate, out of which triphenyl phosphate and trimethyl phosphate are preferred.

Examples of the phosphonite compound include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis (2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite. Tetrakis(di-tert-butylphenyl)-biphenylene diphosphonites and bis(di-tert-butylphenyl)-phenyl-phenyl phosphonites are preferred, and tetrakis(2,4-di-tert-butylphenyl)-biphenylene diphosphonites and bis(2,4-di-tert-butylphenyl)-phenyl-phenyl phosphonites are more preferred. The phosphonite compound may be and is preferably used in combination with the above phosphite compound having an aryl group substituted by two or more alkyl groups.

Examples of the phosphonate compound include dimethylbenzene phosphonate, diethylbenzene phosphonate and dipropylbenzene phosphonate. Examples of the tertiary phosphine include triethyl phosphine, tripropyl phosphine, tributyl phosphine, trioctyl phosphine, triamyl phosphine, dimethylphenyl phosphine, dibutylphenyl phosphine, diphenylmethyl phosphine, diphenyloctyl phosphine, triphenyl phosphine, tri-p-tolyl phosphine, trinaphthyl phosphine and diphenylbenzyl phosphine. Triphenyl phosphine is particularly preferred as the tertiary phosphine. The above phosphorus-based stabilizers may be used alone or in combination of two or more. Out of these phosphorus-based stabilizers, alkyl phosphate compounds typified by trimethyl phosphate are preferably used. A combination of an alkylphosphate compound and a phosphite compound and/or a phosphonite compound is also preferred.

(IV) Hindered phenol-based stabilizer

The resin composition of the present invention may be further mixed with a hindered phenol-based stabilizer. When a hindered phenol-based stabilizer is used, it provides the effect of suppressing the deterioration of hue at the time of molding or during long-time use.

Examples of the hindered phenol-based stabilizer include α-tocopherol, butylhydroxytoluene, sinapyl alcohol, vitamin E, n-octadecyl-β-(4'-hydroxy-3',5'-di-tert-butylphenol) propionate, 2-tert-butyl-6-(3'-tert-butyl-5'-methyl-2'-hydroxybenzyl )-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidene-bis(3-methyl-6-tert-butylphenol), triethylene glycol-N-bis-3-(3-tert-butyl-4-hydroxy-5-methylphenyl) propionate, 1,6-hexanediol-bis[3-(3,5-di-tert-butyl-4-hydroxyphenyl) propionate], bis[2-tert-butyl-4-methyl-6-(3-tert-butyl-5-methyl-2-hydroxybenzyl)phenyl]terephthalate, 3,9-bis{2-[3-(3-tert-butyl-4-hydroxy-5-methylphenyl) propionyloxy]-1,1-dimethylethyl}-2,4,8,10-tetraoxaspiro[ 5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5--triazine, N,N'-hexamethylenebis-(3,5-di-tert-butyl-4-hydroxyhydrocinnamide), N,N'-bis[3-(3,5-di-tert-butyl-4-hydroxyphenyl)propionyl] hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl) isocyanurate, 1,3,5-tris-2[3(3,5-di-tert-butyl-4-hydroxyphenyl) propionyloxy]ethyl isocyanurate and tetrakis[methylene-3-(3',5'-di-tert-butyl-4-hydroxyphenyl)propionate]methane. All of them are easily acquired. The above hindered phenol-based stabilizers may be used alone or in combination of two or more.

The contents of the phosphorus-based stabilizer and the hindered phenol-based stabilizer are preferably 0.0001 to 1 part by weight, more preferably 0.001 to 0.5 part by weight and much more preferably 0.005 to 0.3 part by weight based on 100 parts by weight of the resin composition.

(V) Heat stabilizer except for the above stabilizers

The resin composition of the present invention may be mixed with another heat stabilizer except for the above phosphorus-based stabilizer and the hindered phenol-based stabilizer. A preferred example of the heat stabilizer is a lactone-based stabilizer typified by a reaction product of 3-hydroxy-5,7-di-tert-butyl-furan-2-one and o-xylene. This stabilizer is detailed in JP-A 7-233160. This compound is marketed under the name of Irganox HP-136 (trademark, manufactured by Ciba Specialty Chemicals) and may be used. A stabilizer prepared by mixing together the above compound, a phosphite compound and a hindered phenol compound is commercially available. A preferred example of the stabilizer is the Irganox HP-2921 of Ciba Specialty Chemicals. The content of the lactone-based stabilizer is preferably 0.0005 to 0.05 part by weight and more preferably 0.001 to 0.03 part by weight based on 100 parts by weight of the resin composition.

Other stabilizers include sulfur-containing stabilizers such as pentaerythritol tetrakis(3-mercaptopropionate), pentaerythritol tetrakis(3-laurylthiopropionate) and glycerol-3-stearyl thiopropionate. The content of the sulfur-containing stabilizer is preferably 0.001 to 0.1 part by weight and more preferably 0.01 to 0.08 part by weight based on 100 parts by weight of the resin composition.

The resin composition of the present invention may be mixed with an epoxy compound as required. The epoxy compound is used to suppress the corrosion of a metal mold, and all epoxy compounds having an epoxy functional group may be basically used. Preferred examples of the epoxy compound include 3,4-epoxycyclohexylmethyl-3',4'-epoxycyclohexyl carboxylate, 1,2-epoxy-4-(2-oxiranyl)cyclohexane adduct of 2,2-bis(hydroxymethyl)-1-butanol, copolymer of methyl methacrylate and glycidyl methacrylate, and copolymer of styrene and glycidyl methacrylate. The content of the epoxy compound is preferably 0.003 to 0.2 part by weight, more preferably 0.004 to 0.15 part by weight and much more preferably 0.005 to 0.1 part by weight based on 100 parts by weight of the resin composition.

(VI) Ultraviolet absorbent

An ultraviolet absorbent may be mixed with the resin composition of the present invention to provide light resistance. Examples of the benzophenone-based ultraviolet absorbent include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophenone and 2-hydroxy-4-methoxy-2'-carboxybenzophenone.

Examples of the benzotriazole-based ultraviolet absorbent include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), 2-[2-hydroxy-3-(3,4,5,6-tetrahydrophthalimidomethyl)-5-methylphenyl]benzotriazole, and polymers having a 2-hydroxyphenyl-2H-benzotriazole skeleton such as a copolymer of 2-(2'-hydroxy-5-methacryloxyethylphenyl)-2H-benzotriazole and a vinyl-based monomer copolymerizable with that monomer and a copolymer of 2-(2'-hydroxy-5-acryloxyethylpheny)-2H-benzotriazole and a vinyl-based monomer copolymerizable with that monomer.

Examples of the hydroxyphenyltriazine-based ultraviolet absorbent include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol and 2-(4,6-diphenyl-1,3,5-triazin-2-yl)-5-butyloxyphenol. Further, compounds having a 2,4-dimethylphenyl group in place of the phenyl groups of the above compounds, such as 2-(4,6-bis(2,4-dimethylphenyl)-1,3,5-triazin-2-yl)-5-hexyloxyphenol, are also included.

Examples of the cyclic iminoester-based ultraviolet absorbent include 2,2'-p-phenylenebis(3,1-benzoxazin-4-one), 2,2'-m-phenylenebis(3,1-benzoxazin-4-one) and 2,2'-p,p'-diphenylenebis(3,1-benzoxazin-4-one).

Examples of the cyanoacrylate-based ultraviolet absorbent include 1,3-bis[(2'-cyano-3',3'-diphenylacryloyl)oxy]-2,2-bis[(2 -cyano-3,3-diphenylacryloyl)oxy]methyl)propane and 1,3-bis-[(2-cyano-3,3-diphenylacryloyl)oxy]benzene.

The above ultraviolet absorbent may be a polymer type ultraviolet absorbent obtained by copolymerizing an ultraviolet absorbing monomer and/or an optically stable monomer which has the structure of a monomer compound able to be radically polymerized with a monomer such as an alkyl (meth)acrylate. The above ultraviolet absorbing monomer is preferably a compound having a benzotriazole skeleton, a benzophenone skeleton, a triazine skeleton, a cyclic iminoester skeleton or a cyanoacrylate skeleton in the ester substituent of a (meth)acrylic acid ester. Out of these, benzotriazole-based and hydroxyphenyltriazine-based compounds are preferred from the viewpoint of ultraviolet absorbing ability, and cyclic imionoester-based and cyanoacrylate-based compounds are preferred from the viewpoints of heat resistance and hue. An example of this ultraviolet absorbent is the ChemiSorb 79 of Chemipro Kasei Kaisha Ltd. The above ultraviolet absorbents may be used alone or in combination of two or more.

The content of the ultraviolet absorbent is preferably 0.01 to 2 parts by weight, more preferably 0.02 to 2 parts by weight, much more preferably 0.03 to 1 part by weight and particularly preferably 0.05 to 0.5 part by weight based on 100 parts by weight of the resin composition.

(VII) Fluorescent brightener

The fluorescent brightener in the resin composition of the present invention is not particularly limited if it is used

to change the color of a resin to white or blue-white color. Examples thereof include stilbene-based, benzimidazole-based, benzoxazole-based, naphthalimide-based, rhodamine-based, coumarin-based and oxazine-based compounds. CI Fluorescent Brightener 219:1, the EASTOBRITE OB-1 of Eastman Chemical Company and the Hakkol PSR of Hakkol Chemical Co., Ltd. are such examples. The fluorescent brightener serves to absorb the energy of an ultraviolet part of light and apply this energy to a visible part. The content of the fluorescent brightener is preferably 0.001 to 0.1 part by weight and more preferably 0.001 to 0.05 part by weight based on 100 parts by weight of the resin composition. Even when the content is higher than 0.1 part by weight, the effect of improving the hue of the composition is small.

(VIII) Others

Additives known per se may be mixed with the resin composition of the present invention in small proportions to provide various functions to a molded product of the resin composition and improve the characteristics properties of the molded product in addition to the above additives. These additives are used in normal amounts as long as the object of the present invention is not impaired. The additives include a reinforcing filler, a sliding agent (such as PTFE particles), a colorant, a fluorescent dye, an inorganic phosphor (such as a phosphor containing an aluminate as a mother crystal), an antistatic agent, a crystal nucleating agent, inorganic and organic antibacterial agents, an optical catalyst-based antifouling agent (such as particulate titanium oxide or particulate zinc oxide), a release agent, a flowability modifier, a radical generator, an infrared absorbent (heat-ray absorbent) and a photochromic agent.

The resin composition of the present invention can be pelletized by melt kneading by means of an extruder such as single-screw extruder or double-screw extruder. To produce such a pellet, the above flame retardant, reinforcing filler and additives may be mixed with the resin composition. Various products can be manufactured by injection molding the pellet which has been produced from the resin composition of the present invention as described above. The resin which has been melt kneaded by means of an extruder may be directly formed into a sheet, film, profile extrusion molded article, direct blow molded article or injection molded article without being pelletized. Molded articles can be obtained not only by ordinary molding techniques but also by injection molding techniques such as injection compression molding, injection press molding, gas assist injection molding, foam molding (including what comprises the injection of a super-critical fluid), insert molding, in-mold coating molding, insulated runner molding, quick heating and cooling molding, two-color molding, sandwich molding and super high-speed injection molding according to purpose. The advantages of these molding techniques are already widely known. Both cold-runner molding and hot-runner molding techniques may be employed.

The resin composition of the present invention may be formed into a profile extrusion molded article, sheet or film by extrusion molding. Inflation, calendering and casting techniques may also be used to mold a sheet or a film. Further, a specific stretching operation may be used to mold a heat shrinkable tube. The resin composition of the present invention can be formed into a molded article by rotational molding or blow molding.

(Production of resin composition)

Any process is employed to manufacture the resin composition of the present invention. For example, after the component A, the component B and optionally other components such as the component C are fully mixed together by using pre-mixing means such as a twin-cylinder mixer, Henschel mixer, mechanochemical device or extrusion mixer, the resulting mixture is optionally granulated by means of an extrusion granulator or briquetting machine, melt kneaded by means of a melt kneader typified by a vented double-screw extruder and then pelletized by means of a device such as a pelletizer.

That is, the present invention is a process for manufacturing a resin composition having light-guiding ability by melt kneading the polycarbonate (component A) with the polycarbonate-polydiorganosiloxane copolymer (component B), wherein

(i) the component B contains a unit represented by the above formula (2) and a unit represented by the above formula (4);
(ii) the content of a polydiorganosiloxane block represented by the above formula (5) contained in the above formula (4) is 0.001 to 1.0 wt% based on the total weight of the resin composition; and
(iii) the component B has polydiorganosiloxane domains having an average size of 0.5 to 40 nm existent in a polycarbonate matrix.

<Light guide molded article>

Any process is employed to manufacture a light guide molded article from the resin composition of the present invention. For example, after the resin composition is kneaded by means of an extruder, Banbury mixture or roll, it is

formed by a conventionally known method such as injection molding, extrusion molding or compression molding to obtain a light guide molded article. A light source is placed on at least one side surface of this light guide molded article, and a reflective plate is placed on one side of the light guide molded article to obtain a surface light source body. As a light source for the light guide molded article and the surface light source body, a fluorescent lamp, or a self-light emitter such as a cold-cathode tube, LED, laser diode or organic EL may be used. The light guide molded article and surface light source body of the present invention are used in display parts for cell phones, portable terminals, cameras, timepieces, notebook personal computers, displays, lighting, signals, auto lamps and home electric and optical equipment. Especially when flame retardancy is required for peripheral equipment as in a case when LED is used as a light source for electric products, the light guide plate and surface light source body of the present invention are advantageously used.

The present invention is a method for improving the light-guiding ability of a polycarbonate by melt kneading a polycarbonate (component A) with a polycarbonate-polydiorganosiloxane copolymer (component B), wherein

(i) the component B contains a unit represented by the above formula (2) and a unit represented by the above formula (4);
(ii) the content of a polydiorganosiloxane block represented by the above formula (5) contained in the above formula (4) is 0.001 to 1.0 wt% based on the total weight of the resin composition; and
(iii) the component B has polydiorganosiloxane domains having an average size of 0.5 to 40 nm existent in a polycarbonate matrix.

EXAMPLES

The following examples are provided for the purpose of further illustrating the present invention but are in no way to be taken as limiting. "Parts" in the examples means "parts by weight", and "%" means "wt%". Evaluations were made by the following methods.

Examples 1 to 5

A polycarbonate and additives shown in Table 1 were mixed together in amounts shown in Table 1 by means of a blender and melt kneaded by means of a vented double-screw extruder to obtain a pellet. After a premixture of the polycarbonate and the additives whose amounts were 10 to 100 times larger than the above amounts was prepared, the mixing of all of these components was carried out by means of a blender. The TEX30α vented double-screw extruder of The Nippon Steel Works, Ltd. (completely interlocking type, unidirectional rotation, two screws) was used. The extrusion conditions include a delivery rate of 20 kg/h, a screw revolution of 150 rpm, a vent vacuum degree of 3 kPa, an extrusion temperature from the first feed port to the second feed port of 270°C and an extrusion temperature from the second feed port to the dice of 280°C.

(1) Evaluation of component B

(i) Average size of polyorganosiloxane domains

This was measured by a small angle X-ray scattering (SAXS) method which is described in this text.

(2) Evaluation of resin composition

(i) Haze

Pellets obtained from the compositions of Examples 1 to 5 were dried at 120°C for 5 hours in a hot air drier and molded at a cylinder temperature of 300°C and a mold temperature of 80°C by means of an injection molding machine [IS150EN-5Y of Toshiba Machine Co., Ltd.] to obtain square plates (150 mm x 150 mm x 5 mm) for the evaluation of haze.

(ii) Hue

Pellets obtained from the compositions of Examples 1 to 5 were dried at 120°C for 5 hours in a hot air drier and molded at a cylinder temperature of 300°C and a mold temperature of 80°C by means of an injection molding machine [IS150EN-5Y of Toshiba Machine Co., Ltd.] to obtain square plates (150 mm x 150 mm x 5 mm) for the evaluation of hue.

(iii) Brightness

Pellets obtained from the compositions of Examples 1 to 5 were dried at 120°C for 5 hours in a hot air drier and molded at a cylinder temperature of 300°C and a mold temperature of 80°C by means of an injection molding machine [IS150EN-5Y of Toshiba Machine Co., Ltd.] to obtain light guide plates (100 mm x 70 mm x 4 mm) (the rear surface was embossed at intervals of 1 mm) for the evaluation of brightness.

(iv) Light-guiding ability

Light was applied from the 70 mm x 4 mm edge of the above light guide plate for the measurement of brightness to measure the brightness (A1) of light emitted from the central part at a site 10 mm away from the incident side of a 100 mm x 70 mm surface and the brightness (A2) of light emitted from the central part at a site 80 mm away from the incident side so as to obtain the ratio (A2/A1) as light-guiding ability. The light-guiding ability must be not less than 155 %.

(v) HDT

Pellets obtained from the compositions of Examples 1 to 5 were dried at 120 °C for 5 hours in a hot air drier and molded at a cylinder temperature of 300°C and a mold temperature of 80°C by means of an injection molding machine [IS150EN-5Y of Toshiba Machine Co., Ltd.] to obtain test specimens (80 mm x 10 mm x 4 mm) for evaluation.

Table 1

| | | Ex. 1 | Ex. 2 | Ex. 3 | Ex. 4 | Ex. 5 |
|---|---|---|---|---|---|---|
| Component A | A-1 | 100 | 100 | 100 | | 100 |
| | A-2 | | | | 100 | |
| Component B | B-1 | 0.1 | 1 | | 0.1 | 1 |
| | B-2 | | | 5 | | |
| Others | F114P | | | | | 0.05 |
| | A5 | 0.05 | 0.05 | 0.05 | 0.05 | 0.05 |
| Brightness | $cd/m^2$ | 400 | 450 | 500 | 390 | 470 |
| Light-guiding ability | % | 165 | 180 | 155 | 180 | 190 |
| Haze | % | 0.3 | 0.3 | 0.6 | 0.3 | 0.3 |
| Hue | - | 2 | 1 | 3 | 2 | 1 |
| HDT | °C | 120 | 120 | 120 | 120 | 120 |
| Ex.: Example | | | | | | |

The components used are detailed hereinbelow.

(component A)

A-1: linear aromatic polycarbonate powder synthesized from bisphenol A, p-tert-butylphenol as an end-sealing agent and phosgene by interfacial polycondensation (Panlite L-1225WX (trade name) of Teijin Chemicals Ltd., viscosity average molecular weight of 19,700)
A-2: linear aromatic polycarbonate powder synthesized from bisphenol A, p-tert-butylphenol as an end-sealing agent and phosgene by interfacial polycondensation (CM-1000 (trade name) of Teijin Chemicals Ltd., viscosity average molecular weight of 16,000)

(component B)

B-1: polycarbonate-polydiorganosiloxane copolymer manufactured in the following Production Example 1

Production Example 1:

21,591 parts of ion exchange water and 3,674 parts of a 48.5 % sodium hydroxide aqueous solution were fed to a reactor equipped with a thermometer, a stirrer and a reflux condenser, 3,880 parts of 2,2-bis(4-hydroxyphenyl)propane (bisphenol A) as the dihydroxy compound (I) constituting the carbonate constituent unit represented by the above formula (2) and 7.6 parts of hydrosulfite were dissolved in the resulting mixture, 14,565 parts of methylene chloride (14 moles based on 1 mole of the dihydroxy compound (I)) was added, and 1,900 parts of phosgene was blown into the reactor at 22 to 30°C for about 60 minutes under agitation. Thereafter, a solution prepared by dissolving 1,131 parts of a 48.5 % sodium hydroxide aqueous solution and 108 parts of p-tert-butylphenol in 800 parts of methylene chloride was added, and a solution prepared by dissolving 204 parts of a polydiorganosiloxane compound represented by the following formula [4] as the dihydroxyaryl-terminated polydiorganosiloxane (II) having an average number of repetitions of a dimethylsiloxane unit constituting the carbonate constituent unit represented by the above formula (4) of 40 in 1, 600 parts of methylene chloride was added under agitation at a rate that ensures that the ratio of the dihydroxyaryl-terminated polydiorganosiloxane (II) became 0.0008 mol/min based on 1 mole of the dihydric phenol (I) to be emulsified and violently stirred again. Under agitation, 4.3 parts of triethylamine was added while the temperature of the reaction solution was 26°C and stirring was continued for 1 hour at a temperature of 26 to 31°C to terminate the reaction. After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate-polydiorganosiloxane copolymer powder. After dehydration, the powder was dried at 120 °C for 12 hours in a hot air circulation drier. (siloxane content of 4.1 %, polydiorganosiloxane domain size of 10 nm, viscosity average molecular weight of 19,100)

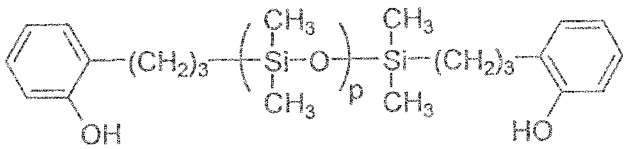

[4]

p= about 40

B-2: polycarbonate-polydiorganosiloxane copolymer produced in the following Production Example 2

Production Example 2

The procedure of Example 1 was repeated to obtain a polycarbonate-polydiorganosiloxane copolymer powder except that 430 parts of dihydroxyaryl-terminated polydiorganosiloxane having an average number of repetitions of the dimethylsiloxane unit of 40 was used and the agitation time was changed to 45 minutes. (siloxane content of 8.2 %, polydiorganosiloxane domain size of 10 nm, viscosity average molecular weight of 19, 400)

(other components)

F114P: potassium salt of perfluorobutanesulfonic acid (Megafac F-114P of DIC Corporation)
A5: Sandstab P-EPQ powder (manufactured by Clariant Japan K.K.)

Examples 6 to 18 and Comparative Examples 1 to 4

The components A and B and additives were mixed together in amounts shown in Tables 2 and 3 by means of a blender and melt kneaded by means of a vented double-screw extruder to obtain a pellet. After a premixture of the polycarbonate and the additives whose amounts were 10 to 100 times larger than the above amounts was prepared, the mixing of all of these components was carried out by means of a blender. The TEX30α vented double-screw extruder of The Nippon Steel Works, Ltd. (completely interlocking type, unidirectional rotation, two screws) was used. The extrusion conditions include a delivery rate of 20 kg/h, a screw revolution of 150 rpm, a vent vacuum degree of 3 kPa, an extrusion temperature from the first feed port to the second feed port of 270°C and an extrusion temperature from the second feed port to the dice of 290°C. The evaluation results are shown in Tables 2 and 3.
The following items were evaluated.

1. Evaluation of polycarbonate-polydiorganosiloxane copolymer (component B)

(1) Viscosity average molecular weight (Mv)

The specific viscosity ($\eta_{sp}$) calculated from the following equation was obtained from a solution prepared by dissolving the polycarbonate-polydiorganosiloxane copolymer in 100 ml of methylene chloride at 20°C by using an Ostwald viscometer, and then the viscosity average molecular weight Mv was calculated from the obtained specific viscosity ($\eta_{sp}$) based on the following equation.

$$\text{Specific viscosity } (\eta_{sp}) = (t - t_0)/t_0$$

[$t_0$ is the number of seconds during which methylene chloride drops and t is the number of seconds during which a sample solution drops]

$$\eta_{sp}/c = [\eta] + 0.45 \times [\eta]^2 c \quad ([\eta] \text{ represents an intrinsic viscosity})$$

$[\eta] = 1.23 \times 10^{-4} M^{0.83}$
c = 0.7

(2) Content of polydiorganosiloxane component

The $^1$H-NMR spectrum of the polycarbonate-polydiorganosiloxane copolymer was measured by using the JNM-AL400 of JEOL Ltd. to compare the integral ratio of a peak derived from the dihydric phenol (I) with the integral ratio of a peak derived from the dihydroxyaryl-terminated polydiorganosiloxane (II). Content of polydiorganosiloxane component (wt%) = [A/(A+B)] x 100

A: [integral ratio of peak of one $^1$H of dihydroxyaryl-terminated polydiorganosiloxane (II)] x [molecular weight of polydiorganosiloxane moiety]
B: [integral ratio of peak of one $^1$H of dihydric phenol (I)] x [molecular weight of dihydric phenol]

(3) Average size of polydiorganosiloxane domains

The polycarbonate-polydiorganosiloxane copolymer powder was kneaded by means of a vented double-screw extruder (KZW15-25MG of Technovel Corporation) at 260°C to be pelleted. The obtained pellet was dried at 120°C for 5 hours in a hot air drier and molded at a molding temperature of 280°C and a mold temperature of 80°C by means of an injection molding machine [SG150U·S-M IV of Sumitomo Heavy Industries, Ltd.] to obtain a three-stage plate having a width of 50 mm, a length of 90 mm and a thickness of 3.0 mm from the gate side (length of 20 mm), 2.0 mm (length of 45 mm) and 1.0 mm (length of 25 mm). This three-stage plate was used to measure the average size of polydiorganosiloxane domains at an intersection point 5 mm from the end portion and 5 mm from the side portion of a 1.0 mm thick portion by means of an X-ray diffraction apparatus (RINT-TTRII of Rigaku Corporation). An X-ray source producing a CuK$\alpha$ characteristic X-ray (wavelength of 0.1541841 nm) and having a tube voltage of 50 kV and a tube current of 300 mA was used. The small angle scattering optical system has a first slit of 0.03 mm with HS of 10 mm, SS of 0.2 mm and RS of 0.1 mm. Measurement was made under the conditions of FT 0.01° step, 4 sec/step and a scanning range of 0.06-3° by an asymmetric scanning method (2$\theta$ scan). The NANO-Solver (Ver. 3.3) small angle scattering analytical software of Rigaku Corporation was used for the analysis of curve fitting. Analysis was made on an isolated particle model having a polycarbonate matrix density of 1.2 g/cm$^3$ and a polydiorganosiloxane domain density of 1.1 g/cm$^3$ in which interaction between particles (interference between particles) was not taken into consideration based on the assumption that it had an aggregation structure comprising a matrix of a polycarbonate polymer and spherical polydiorganosiloxane domains dispersed in the matrix and there were variations in particle size distribution.

2. Evaluation of resin composition

(1) Hue

A pellet obtained from the composition of each Example was dried at 120°C for 5 hours in a hot air circulation drier and molded at a molding temperature of 320°C and a mold temperature of 80°C by means of an injection molding machine [SG150U·S-M IV of Sumitomo Heavy Industries, Ltd.] to manufacture a smooth flat plate having a width of 100 mm, a length of 100 mm and a thickness of 5.0 mm. The hue (YI value) of this smooth flat plate was measured by using the Color-Eye 7000A of Gretag Macbeth Co., Ltd.

(2) Average brightness

A pellet obtained from the composition of each Example was dried at 120°C for 5 hours in a hot air drier and molded at a cylinder temperature of 300°C and a mold temperature of 80°C by means of an injection molding machine [IS150EN-5Y of Toshiba Machine Co., Ltd.] to manufacture a light guide plate for the evaluation of brightness (100 mm x 70 mm x 4 mm) (the rear surface was embossed at intervals of 0.1 mm) . This light guide plate was placed in such a manner that the rear surface became a lower side, and light was applied from the 70 mm x 4 mm edge to measure the brightness of light emitted from the 100 mm x 70 mm surface with the BM-7 of Topcon Corporation. The average brightness was obtained by averaging the measurement values of 9 sites at intersections of 3 levels in width and 3 levels in length. Incident light was obtained by using a light source comprising NS2W150 LED' s (of Nichia Corporation) at a pitch of 18 mm (power consumption of about 30 W).

(3) In-plane color difference

The above light guide plate was placed in such a manner that the rear surface became a lower side, and light was applied from the 70 mm x 4 mm edge to measure chromaticity (x, y) emitted from the 100 mm x 70 mm surface by using the BM-7 of Topcon Corporation. The in-plane color difference ($\Delta$(x, y)) was evaluated from numerical values calculated from the following equation (1). As the numerical value becomes smaller, the in-plane color difference becomes smaller. Incident light was obtained by using a light source comprising NS2W150 LED's (of Nichia Corporation) at a pitch of 18 mm (power consumption of about 30 W).

$$\Delta(x, y) = [(x_2 - x_1)^2 + (y_2 - y_1)^2]^{1/2} \quad (1)$$

($x_1$, $y_1$) chromaticity at a site 80 mm away from the side surface on a light source side
($x_2$, $y_2$) chromaticity at a site 20 mm away from the side surface on a light source side

(4) Appearance after continuous molding

A pellet obtained from the composition of each Example was dried at 120°C for 5 hours in a hot air drier and molded at a cylinder temperature of 320°C and a mold temperature of 90°C by means of an injection molding machine [IS150EN-5Y of Toshiba Machine Co., Ltd.] to manufacture a light guide plate for the evaluation of brightness (100 mm x 70 mm x 4 mm) (the rear surface was embossed at intervals of 0.1 mm). Continuous molding was carried out 500 times to visually evaluate the appearance of a molded piece after 500 times of molding. The evaluation criteria are as follows.

○ no poor appearance derived from a deposit on the surface of a molded article
X poor appearance derived from a deposit on the surface of a molded article

Table 2

| | | | | Ex.6 | Ex.7 | Ex.8 | Ex.9 | Ex.10 | Ex.11 | Ex.12 |
|---|---|---|---|---|---|---|---|---|---|---|
| Composition | Component A | A-i | pbw | 99 | | 99 | 99 | 99 | 99 | 99 |
| | | A-ii | pbw | | 99 | | | | | |
| | Component B | B-i | pbw | 1 | 1 | 1 | | | | |
| | | B-ii | pbw | | | | 1 | | | |
| | | B-iii | pbw | | | | | 1 | | |
| | | B-iv | pbw | | | | | | 1 | |
| | | B-v | pbw | | | | | | | 1 |
| | Component C | C-i | pbw | 0.1 | 0.1 | | 0.1 | 0.1 | 0.1 | 0.1 |
| | | C-ii | pbw | | | 0.1 | | | | |
| | Other component | E-i | pbw | 0.04 | 0.04 | 0.04 | 0.04 | 0.04 | 0.04 | 0.04 |
| Evaluation of characteristic properties | Siloxane domain size of component B | | nm | 10 | 10 | 10 | 13 | 25 | 38 | 1 |
| | Hue(YI) | | | 1.16 | 1.16 | 1.19 | 1.22 | 1.21 | 1.25 | 1.22 |
| | Average brightness | | $Cd/m^2$ | 6600 | 6400 | 6500 | 6800 | 6200 | 5500 | 6800 |
| | In-plane color difference | | | 7.84E-02 | 7.89E-02 | 7.86E-02 | 7.71E-02 | 8.03E-02 | 8.44E-02 | 7.71E-02 |
| | Content of polydiorgano-siloxane component | | % | 0.04 | 0.04 | 0.04 | 0.08 | 0.04 | 0.04 | 0.08 |
| | Appearance after continuous molding | | | ○ | ○ | ○ | ○ | ○ | ○ | ○ |

pbw: parts by weight
Ex.: Example

Table 2 (continued)

| | | | | Ex.13 | Ex.14 | Ex.15 | Ex.16 | Ex.17 | Ex.18 |
|---|---|---|---|---|---|---|---|---|---|
| Composition | Component A | A-i | pbw | 99.875 | 80 | 99 | 99 | | |
| | | A-ii | pbw | | | | | | 99.5 |
| | | A-iii | pbw | | | | | 99 | |
| | Component B | B-i | pbw | 0.125 | 20 | 1 | 1 | 1 | |
| | | B-ii | pbw | | | | | | 0.5 |
| | Component C | C-i | pbw | 0.1 | 0.1 | 0.02 | 0.8 | 0.1 | 0.05 |
| | Other component | D-i | pbw | | | | | | 5 |
| | | D-ii | pbw | | | | | 0.05 | |
| | | E-i | pbw | 0.04 | 0.04 | 0.04 | 0.04 | 0.04 | 0.04 |
| | | F-i | pbw | | | | | 0.03 | |
| | | G-i | pbw | | | | | | 0.3 |
| | | H-i | pbw | | | | | | 0.002 |
| Evaluation of characteristic properties | Siloxane domain size of component B | | nm | 10 | 10 | 10 | 10 | 10 | 13 |
| | Hue (YI) | | | 1.22 | 1.28 | 1.28 | 1.12 | 1.19 | 1.23 |
| | Average brightness | | $Cd/m^2$ | 6100 | 5900 | 6300 | 6500 | 6200 | 6000 |
| | In-plane color difference | | | 7.88E-02 | 7.69E-02 | 7.84E-02 | 7.84E-02 | 7.99E-02 | 7.59E-02 |
| | Content of polydiorgano-siloxane component | | % | 0.005 | 0.8 | 0.04 | 0.04 | 0.04 | 0.04 |
| | Appearance after continuous molding | | | ○ | ○ | ○ | ○ | ○ | ○ |

Ex.: Example
pbw: parts by weight

Table 3

| | | | | C.Ex.1 | C.Ex.2 | C.Ex.3 | C.Ex.4 |
|---|---|---|---|---|---|---|---|
| Composition | Component A | A-i | pbw | 100 | 100 | 99 | 99 |
| | Component B | B-i | pbw | | | | |
| | | B-vi | pbw | | | 1 | |
| | | B-vii | pbw | | | | 1 |
| | Component C | C-i | pbw | 0.1 | | 0.1 | 0.1 |
| | Other component | E-i | pbw | 0.04 | 0.04 | 0.04 | 0.04 |
| Evaluation of characteristic properties | Siloxane domain size of component B | | nm | - | - | 0.3 | 48 |
| | Hue (YI) | | | 1.3 | 1.57 | 1.28 | 1.26 |
| | Average brightness | | $Cd/m^2$ | 4500 | 4100 | 4800 | 4900 |
| | In-plane color difference | | | 1.25E-01 | 1.44E-01 | 1.08E-01 | 8.46E-02 |
| | Content of polydiorganosiloxane component | | % | - | - | 0.04 | 0.04 |
| | Appearance after continuous molding | | | ○ | ○ | ○ | ○ |
| C.Ex.: Comparative Example<br>pbw: parts by weight | | | | | | | |

The components used are detailed hereinbelow.

(component A)

A-i: polycarbonate powder having a molecular weight of 13,500 obtained by the following method

2,340 parts of ion exchange water, 947 parts of a 25 % sodium hydroxide aqueous solution and 0.7 part of hydrosulfite were fed to a reactor equipped with a thermometer, a stirrer and a reflux condenser, 710 parts of 2,2-bis(4-hydroxyphenyl)propane (may be referred to as "bisphenol A" hereinafter) was dissolved under agitation (bisphenol A solution), 2,299 parts of methylene chloride and 112 parts of a 48.5 % sodium hydroxide aqueous solution were added to the resulting solution, and 354 parts of phosgene was blown into the reactor at 15 to 25°C for about 90 minutes to carry out a phosgene reaction. After the end of the phosgene reaction, 257 parts of a 11 % methylene chloride solution of p-tert-butylphenol and 88 parts of a 48.5% sodium hydroxide aqueous solution were added, stirring was suspended, the resulting solution was left to stand for 10 minutes and separated, stirring was resumed to emulsify the solution, and five minutes after that, the obtained emulsion was treated 35 times of pass at a revolution of 1, 200 rpm by means of a homomixer (manufactured by PRIMIX Corporation) to obtain highly emulsified dope. This highly emulsified dope was reacted in a polymerization tank (having a stirrer) at a temperature of 35°C for 3 hours under no agitation to complete polymerization. After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate powder. After dehydration, the powder was dried at 120°C for 12 hours in a hot air circulation drier to obtain a polycarbonate powder.

A-ii: polycarbonate powder having a viscosity average molecular weight of 15,100 obtained by the following method

A polycarbonate powder was obtained in the same manner as A-i except that the amount of the 11 % methylene chloride solution of p-tert-butylphenol was changed to 221 parts. A- iii: polycarbonate powder having a branch structure and a viscosity average molecular weight of 20,300 obtained by the following method

2,340 parts of ion exchange water, 947 parts of a 25 % sodium hydroxide aqueous solution and 0.7 part of hydrosulfite were fed to a reactor equipped with a thermometer, a stirrer and a reflux condenser, 710 parts of bisphenol A was dissolved under agitation (bisphenol A solution), 2,299 parts of methylene chloride, 112 parts of a 48.5% sodium hydroxide aqueous solution and 38.1 parts (1.00 mol%) of an aqueous solution prepared by dissolving 1,1,1-tris(4-hydroxyphenyl)ethane in a 14 % sodium hydroxide aqueous solution to a concentration of 25 % were added, and 354 parts of phosgene was blown into the reactor at 15 to 25°C for about 90 minutes to carry out a phosgene reaction. After the end of the phosgene reaction, 261 parts of a 11 % methylene chloride solution of p-tert-butylphenol and 88 parts of a 48.5 % sodium hydroxide aqueous solution were added, stirring was suspended, the resulting solution was left to stand for 10 minutes and separated, stirring was resumed to emulsify the solution, and five minutes after that, the obtained emulsion was treated 35 times of pass at a revolution of 1,200 rpm by means of a homomixer (manufactured by PRIMIX Corporation) to obtain highly emulsified dope. This highly emulsified dope was reacted in a polymerization tank (having a stirrer) at a temperature of 35°C for 3 hours under no agitation to complete polymerization. After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate powder. After dehydration, the powder was dried at 120°C for 12 hours in a hot air circulation drier to obtain a polycarbonate powder.

(component B)

B-i: polycarbonate-polydiorganosiloxane copolymer powder having a viscosity average molecular weight of 19,100 obtained by the following method

21,591 parts of ion exchange water and 3,674 parts of a 48.5 % sodium hydroxide aqueous solution were fed to a reactor equipped with a thermometer, a stirrer and a reflux condenser, 3,880 parts of 2,2-bis(4-hydroxyphenyl)propane (bisphenol A) as the dihydroxy compound (I) constituting the carbonate constituent unit represented by the above formula (1) and 7.6 parts of hydrosulfite were dissolved, 14,565 parts of methylene chloride (14 moles based on 1 mole of the dihydroxy compound (I)) was added, and 1,900 parts of phosgene was blown into the reactor at 22 to 30°C for about 60 minutes under agitation. Thereafter, a solution prepared by dissolving 1,131 parts of a 48.5% sodium hydroxide aqueous solution and 108 parts of p-tert-butylphenol in 800 parts of methylene chloride was added, a solution prepared by dissolving 204 parts of a polydiorganosiloxane compound represented by the following formula [9] as the dihydroxyaryl-terminated polydiorganosiloxane (II) having an average number of repetitions of a dimethylsiloxane unit constituting the carbonate constituent unit represented by the above formula (3) of about 37 in 1,600 parts of methylene chloride was added under agitation at a rate that ensures that the ratio of the dihydroxyaryl-terminated polydiorganosiloxane (II) became 0.0008 mol/min based on 1 mole of the dihydric phenol (I) to be emulsified and violently stirred again. Under agitation, 4.3 parts of triethylamine was added while the temperature of the reaction solution was 26°C and stirring was continued for 1 hour at a temperature of 26 to 31°C to terminate the reaction. After the end of the reaction, an organic phase was separated, diluted with methylene chloride, rinsed, made acidic with hydrochloric acid and rinsed, the obtained product was injected into a kneader filled with hot water when the conductivity of a water phase became almost the same as that of ion exchange water, and methylene chloride was evaporated under agitation to obtain a polycarbonate-polydiorganosiloxane copolymer powder. After dehydration, the powder was dried at 120°C for 12 hours in a hot air circulation drier to obtain a polycarbonate-polydiorganosiloxane copolymer powder. (polydiorganosiloxane component content of 4.1 %, polydiorganosiloxane domain average size of 10 nm, viscosity average molecular weight of 19,100)

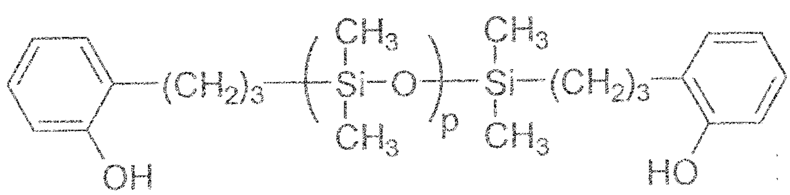

[9]

P= about 37

B-ii: polycarbonate-polydiorganosiloxane copolymer powder having a viscosity average molecular weight of 19,400 obtained by the following method

A polycarbonate-polydiorganosiloxane copolymer powder was obtained in the same manner as the production method of B-i except that 430 parts of the dihydroxyaryl-terminated polydiorganosiloxane having an average number of repetitions of the dimethylsiloxane unit constituting the polycarbonate constituent unit of about 37 was used and the agitation time was changed to 45 minutes. (polydiorganosiloxane component content of 8.2 %, polydiorganosiloxane domain average size of 13 nm, viscosity average molecular weight of 19,400).

B-iii: polycarbonate-polydiorganosiloxane copolymer powder having a viscosity average molecular weight of 19,200 obtained by the following method

A polycarbonate-polydiorganosiloxane copolymer powder was obtained in the same manner as the production method of B-i except that the average number of repetitions of the dimethylsiloxane unit constituting the polycarbonate constituent unit was changed to about 100. (polydiorganosiloxane component content of 4.2 %, polydiorganosiloxane domain average size of 25 nm, viscosity average molecular weight of 19,200). B-iv: polycarbonate-polydiorganosiloxane copolymer powder having a viscosity average molecular weight of 19,600 obtained by the following method

A polycarbonate-polydiorganosiloxane copolymer powder was obtained in the same manner as the production method of B-i except that the average number of repetitions of the dimethylsiloxane unit constituting the polycarbonate constituent unit was changed to about 150. (polydiorganosiloxane component content of 4.2 %, polydiorganosiloxane domain average size of 38 nm, viscosity average molecular weight of 19,600). B-v: polycarbonate-polydiorganosiloxane copolymer powder having a viscosity average molecular weight of 18,900 obtained by the following method

A polycarbonate-polydiorganosiloxane copolymer powder was obtained in the same manner as the production method of B-i except that the average number of repetitions of the dimethylsiloxane unit constituting the polycarbonate constituent unit was changed to about 13. (polydiorganosiloxane component content of 4.2 %, polydiorganosiloxane domain average size of 1.0 nm, viscosity average molecular weight of 18,900). B-vi: polycarbonate-polydiorganosiloxane copolymer powder having a viscosity average molecular weight of 19,200 obtained by the following method

A polycarbonate-polydiorganosiloxane copolymer powder was obtained in the same manner as the production method of B-i except that the average number of repetitions of the dimethylsiloxane unit constituting the polycarbonate constituent unit was changed to about 13 and the amount of the polydiorganosiloxane compound was changed to 2 parts. (polydiorganosiloxane component content of 0.04 %, polydiorganosiloxane domain average size of 0.3 nm, viscosity average molecular weight of 19,200). B-vii: polycarbonate-polydiorganosiloxane copolymer powder having a viscosity average molecular weight of 18,500 obtained by the following method

A polycarbonate-polydiorganosiloxane copolymer powder was obtained in the same manner as the production method of B-i except that the average number of repetitions of the dimethylsiloxane unit constituting the polycarbonate constituent unit was changed to about 200. (polydiorganosiloxane component content of 4.2 %, polydiorganosiloxane domain average size of 48 nm, viscosity average molecular weight of 18,500).

(Component C)

C-i: bis(2,6-di-t-butyl-4-methylphenyl)pentaerythritol diphosphite (ADK STAB PEP-36 of ADEKA Corporation)
C-ii: bis(2,4-di-tert-butylphenyl)pentaerythritol diphosphite (ADK STAB PEP-24G of ADEKA Corporation)

(other components)

D-i: phosphoric acid ester comprising resorcinol bis[di(2,6-dimethylphenyl)phosphate] as the main component (PX-200 (trade name) of Daihachi Chemical Industry Co., Ltd.)
D-ii: perfluorobutanesulfonic acid potassium salt (Megafac F-114P (trade name) of Dainippon Ink and Chemicals, Inc.)
E-i: glycerin monostearate (Rikemal S-100A (trade name) of Riken Vitamin Co., Ltd.)
F-i: hindered phenol-based antioxidant (Irganox 1076 (trade name) of Ciba Specialty Chemicals)
G-i: UV absorbent (Chemisoap 79 (trade name) of Chemipro Kasei Kaisha Ltd.)
H-i: fluorescent brightener (Hakkol PSR (trade name) of Hakkol Chemical Co., Ltd.)

Effect of the Invention

The resin composition of the present invention is excellent in transparency, impact resistance and light guiding properties as polydiorganosiloxane domains in a molded product thereof form a specific agglomeration structure.

Since the resin composition of the present invention is excellent in transparency, impact resistance and light guiding properties, it can be used in a wide variety of fields such as optical parts, electric and electronic equipment and automobiles. More specifically, it can be used in covers for lighting, diffusing plates for displays, glass substitutes, optical disks and related members such as optical disks, housing molded articles such as battery housings, lens barrels, memory cards, speaker cones, disk cartridges, surface illuminators, mechanical parts for micro-machines, hinged molded articles and molded articles for hinges, light transmitting and guiding buttons and touch panel parts.

## Claims

1. A resin composition comprising a polycarbonate (component A) and a polycarbonate-polydiorganosiloxane copolymer (component B) and having light-guiding ability, wherein

   (i) the component B contains a unit represented by the following formula (2) and a unit represented by the following formula (4);
   (ii) the content of a polydiorganosiloxane block represented by the following formula (5) contained in the formula (4) is 0.001 to 1.0 wt% based on the total weight of the resin composition; and
   (iii) the component B has polydiorganosiloxane domains having an average size of 0.5 to 40 nm existent in a polycarbonate matrix.

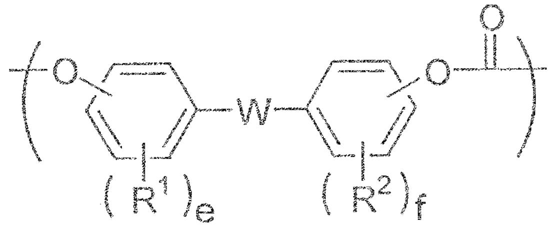

(2)

[In the formula (2), $R^1$ and $R^2$ are each independently a group selected from the group consisting of hydrogen atom, halogen atom, alkyl group having 1 to 18 carbon atoms, alkoxy group having 1 to 18 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 3 to 14 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^1$'s and a plurality of $R^2$'s, "e" and "f" are each an integer of 1 to 4, W is a single bond or at least one group selected from the group consisting of groups represented by the following formulas (3).

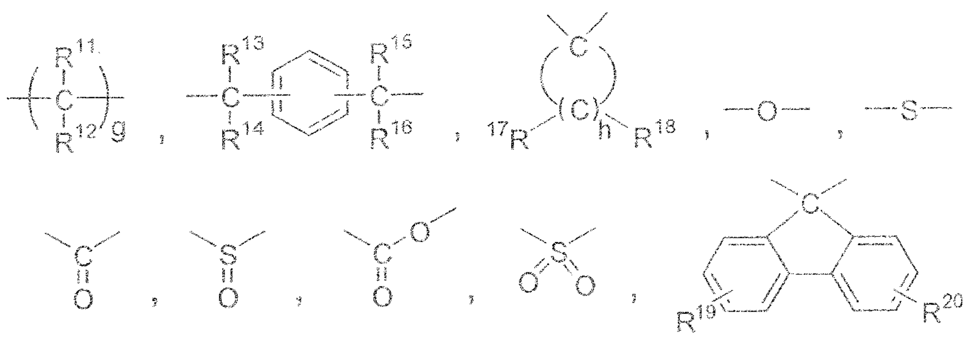

(3)

(In the formulas (3), $R^{11}$, $R^{12}$, $R^{13}$, $R^{14}$, $R^{15}$, $R^{16}$, $R^{17}$ and $R^{18}$ are each independently a group selected from the group consisting of hydrogen atom, alkyl group having 1 to 18 carbon atoms, aryl group having 3 to 14 carbon atoms and aralkyl group having 7 to 20 carbon atoms, $R^{19}$ and $R^{20}$ are each independently a group selected from the group consisting of hydrogen atom, halogen atom, alkyl group having 1 to 18 carbon atoms, alkoxy group having 1

to 10 carbon atoms, cycloalkyl group having 6 to 20 carbon atoms, cycloalkoxy group having 6 to 20 carbon atoms, alkenyl group having 2 to 10 carbon atoms, aryl group having 3 to 14 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and may be the same or different when there are a plurality of $R^{19}$'s and a plurality of $R^{20}$'s, "g" is an integer of 1 to 10, and "h" is an integer of 4 to 7.).]

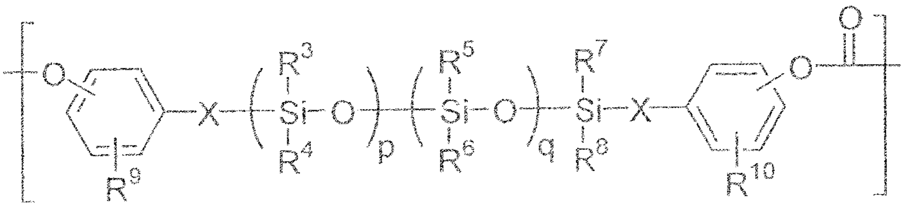
(4)

(In the formula (4), $R^3$, $R^4$, $R^5$, $R^6$, $R^7$ and $R^8$ are each independently a hydrogen atom, alkyl group having 1 to 12 carbon atoms, or substituted or nonsubstituted aryl group having 6 to 12 carbon atoms, $R^9$ and $R^{10}$ are each independently a hydrogen atom, halogen atom, alkyl group having 1 to 10 carbon atoms or alkoxy group having 1 to 10 carbon atoms, "p" is a natural number, "q" is 0 or a natural number, (p+q) is a natural number of not more than 150, and X is a divalent aliphatic group having 2 to 8 carbon atoms).

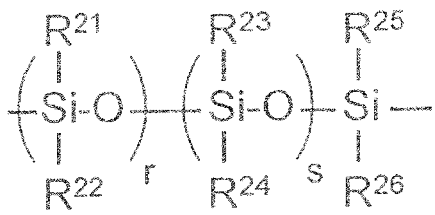
(5)

(In the formula (5), $R^{21}$, $R^{22}$, $R^{23}$, $R^{24}$, $R^{25}$ and $R^{26}$ are identical to $R^3$, $R^4$, $R^5$, $R^6$, $R^7$ and $R^8$ of the formula (4), respectively. "r" is the same as "p". "s" is the same as "q". (r+s) is the same as (p+q).)

2. The resin composition according to claim 1 which comprises the component B in an amount of 0.01 to 10.0 parts by weight based on 100 parts by weight of the component A.

3. The resin composition according to claim 1 which comprises the component B in an amount of 0.01 to 5.0 parts by weight based on 100 parts by weight of the component A.

4. The resin composition according to claim 1 which comprises a stabilizer (component C) represented by the following formula (1) in an amount of 0.01 to 1.0 part by weight based on 100 parts by weight of the total of the components A and B.

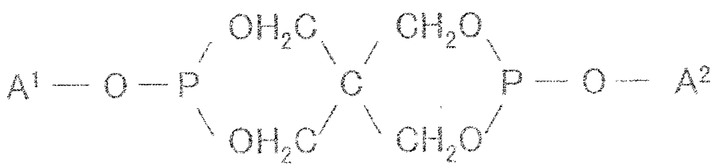
(1)

(In the formula (1), $A^1$ and $A^2$ are each independently an aryl group or alkyl group and may be the same or different.)

5. The resin composition according to claim 1, wherein the content of the polydiorganosiloxane block represented by the formula (5) contained in the formula (4) is 0.01 to 0.2 wt% based on the total weight of the resin composition.

6. The resin composition according to claim 1, wherein the component B is a polycarbonate-polydiorganosiloxane copolymer in which polydiorganosiloxane domains having an average size of 0.5 to 18 nm are existent in the polycarbonate matrix.

**7.** A light guide molded article obtained by molding the resin composition of any one of claims 1 to 6.

**8.** A surface light source body obtained by molding the resin composition of any one of claims 1 to 6.

Fig. 1

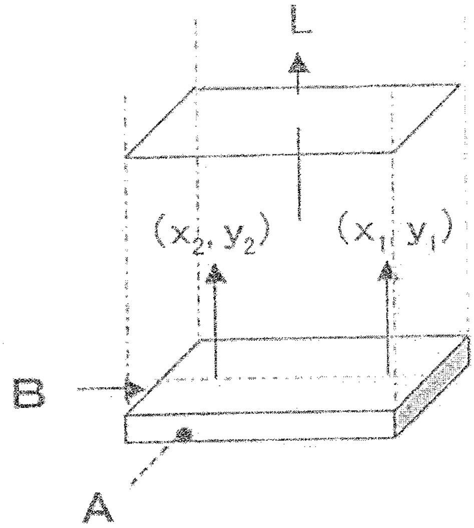

## INTERNATIONAL SEARCH REPORT

International application No.
PCT/JP2012/080113

A. CLASSIFICATION OF SUBJECT MATTER
*C08L101/00*(2006.01)i, *C08G64/08*(2006.01)i, *C08L69/00*(2006.01)i, *G02B6/00* (2006.01)i

According to International Patent Classification (IPC) or to both national classification and IPC

B. FIELDS SEARCHED

Minimum documentation searched (classification system followed by classification symbols)
C08L101/00, C08G64/08, C08L69/00, G02B6/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-102364 A (Teijin Chemicals Ltd.), 26 May 2011 (26.05.2011), claim 1; paragraphs [0052], [0153] to [0169] & EP 2460837 A1 & WO 2011/013846 A1 & TW 201127882 A & CN 102471474 A & KR 10-2012-0050968 A | 1-8 |
| A | JP 2007-204737 A (Mitsubishi Engineering-Plastics Corp.), 16 August 2007 (16.08.2007), entire text & JP 2012-179911 A & US 2009/0162628 A1 & EP 1970410 A1 & WO 2007/077874 A1 & KR 10-2008-0082967 A & CN 101356233 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 February, 2013 (14.02.13) | 26 February, 2013 (26.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/080113

C (Continuation). DOCUMENTS CONSIDERED TO BE RELEVANT

| Category* | Citation of document, with indication, where appropriate, of the relevant passages | Relevant to claim No. |
|---|---|---|
| A | JP 4446668 B2 (Mitsubishi Engineering-Plastics Corp.), 29 January 2010 (29.01.2010), entire text (Family: none) | 1-8 |
| A | JP 2006-523243 A (General Electric Co.), 12 October 2006 (12.10.2006), entire text & JP 2006-518803 A & US 2005/0187372 A1 & EP 1597317 A2 & EP 1611176 A2 & WO 2004/076541 A2 & WO 2004/076512 A2 & KR 10-2005-0107443 A & KR 10-2005-0107583 A & CN 1751096 A & CN 1798791 A & CN 101121789 A & CN 102161753 A & KR 10-1102637 B | 1-8 |
| A | JP 2009-120707 A (Teijin Chemicals Ltd.), 04 June 2009 (04.06.2009), entire text & CN 101434750 A | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007204737 A
- JP 3330498 B
- JP 3516908 B
- JP 2006201667 A
- JP 4446668 B
- JP 2006523243 A
- JP 6145520 A
- JP 60258263 A
- JP 63154744 A
- JP 4272957 A
- JP 6220210 A
- JP 8188653 A
- JP 9095583 A
- JP 11029679 A
- JP 7233160 A